# EUROPEAN PATENT APPLICATION

(11) **EP 4 730 825 A1**
(43) Date of publication of application: **22.04.2026**
(21) Application number: 24839921.4
(22) Date of filing: 11.06.2024
(51) Int. Cl.: H04N 23/54, H04N 23/55, H04N 23/57, G03B 5/00, G03B 3/10, G03B 13/36, G03B 17/12, G03B 30/00

(54) **CAMERA MODULE AND ELECTRONIC DEVICE COMPRISING SAME**

(30) Priority: 12.07.2023 KR 20230090540; 16.08.2023 KR 20230107024
(71) Applicant: Samsung Electronics Co., Ltd., Suwon-si, Gyeonggi-do 16677 (KR)
(72) Inventor: BYON, Kwangseok, Suwon-si Gyeonggi-do 16677 (KR); KIM, Bongchan, Suwon-si Gyeonggi-do 16677 (KR); YU, Youngbok, Suwon-si Gyeonggi-do 16677 (KR); JUNG, Hwajoong, Suwon-si Gyeonggi-do 16677 (KR)
(74) Representative: Appleyard Lees IP LLP
(86) International application number: PCT/KR2024/007976
(87) International publication number: WO 2025/014106

(57) **Abstract**

A camera module according to one embodiment may comprise: a housing; a lens assembly disposed so as to be movable with respect to the housing; a first driving unit that moves the lens assembly in a first direction with respect to the housing; an image sensor; and a printed circuit board on which the image sensor is disposed. The first driving unit may include: a first carrier that transfers the lens assembly in the first direction; and at least one first sphere arranged to allow the first carrier to move in the first direction with respect to the housing. The first carrier may include at least one first guide portion that guides the at least one first sphere to move in the first direction. The housing may include a first portion disposed to at least partially overlap the printed circuit board in a direction substantially perpendicular to the first direction such that a recess for accommodating at least a portion of the at least one first guide portion of the first carrier is formed therein. At least one width of the printed circuit board in the direction in which the first portion and the printed circuit board overlap each other may be substantially the same as the width of the housing in the direction in which the first portion and the printed circuit board overlap each other. Various other embodiments identified through the specification are possible.

## Description

### [Technical Field]

Embodiments of the disclosure relate to a camera module and an electronic device including the same.

### [Background Art]

As digital camera manufacturing technologies have improved, electronic devices with small, lightweight camera modules have been commercialized. As camera modules are mounted in electronic devices (for example, mobile communication terminals) that users typically carry at all times, users may easily use various functions such as taking photos or videos, video call or augmented reality.

An auto focus (AF) function refers to a function of an optical system for automatically adjusting a focus on a subject. An electronic device may move a lens (or a lens assembly) or an image sensor to focus on a subject.

Optic image stabilization (OIS) technology may be applied to improve quality of taken images. An electronic device may detect a motion of the electronic device by using a motion sensor included in the electronic device. The electronic device may acquire a stabilized image by operating a lens or an image sensor to move in response to the motion of the electronic device.

The above information is presented as related art information only to assist with understanding of the disclosure. No determination or assertion is made as to whether any of the above might be applicable as prior art with regard to the disclosure.

### [Disclosure of Invention]

### [Solution to Problem]

According to an embodiment, a camera module may include: a housing; a lens assembly disposed to be movable with respect to the housing and including at least one lens; a first drive unit disposed inside the housing to move the lens assembly in a first direction with respect to the housing; an image sensor configured to convert light received through the at least one lens into an electrical signal; and a printed circuit board in which the image sensor is disposed. The first drive unit may include a first carrier configured to carry the lens assembly in the first direction, and at least one first sphere disposed between the first carrier and the housing to allow the first carrier to move in the first direction relative to the housing. The first carrier may include at least one first guide portion configured to guide the at least one first sphere to move in the first direction. The housing may include a first portion disposed to overlap the printed circuit board at least in part in a direction substantially perpendicular to the first direction to form a recess in the housing to accommodate at least a part of the at least one first guide portion of the first carrier. At least one width of the printed circuit board in a direction in which the first portion and the printed circuit board overlap each other may be substantially the same as a width of the housing in the direction in which the first portion and the printed circuit board overlap each other.

According to an embodiment, an electronic device may include a camera module and at least one processor configured to control operations of the camera module. The camera module may include: a housing; a lens assembly disposed to be movable with respect to the housing and including at least one lens; a first drive unit disposed inside the housing to move the lens assembly in a first direction with respect to the housing; an image sensor configured to convert light received through the at least one lens into an electrical signal; and a printed circuit board in which the image sensor is disposed. The first drive unit may include a first carrier configured to carry the lens assembly in the first direction, and at least one first sphere disposed between the first carrier and the housing to allow the first carrier to move in the first direction relative to the housing. The first carrier may include at least one first guide portion configured to guide the at least one first sphere to move in the first direction. The housing may include a first portion disposed to overlap the printed circuit board at least in part in a direction substantially perpendicular to the first direction to form a recess in the housing to accommodate at least a part of the at least one first guide portion of the first carrier. At least one width of the printed circuit board in a direction in which the first portion and the printed circuit board overlap each other may be substantially the same as a width of the housing in the direction in which the first portion and the printed circuit board overlap each other.

### [Brief Description of Drawings]

FIG. 1 is a perspective view of a camera module according to an embodiment.
FIG. 2 is a view taken on line A-A' of FIG. 1, illustrating a camera module.
FIG. 3 is a perspective view of a printed circuit board according to an embodiment.
FIG. 4 is a view provided to explain a housing according to an embodiment.
FIG. 5 is a view illustrating a housing which is disposed on a printed circuit board and a base according to an embodiment.
FIG. 6 is a view provided to explain a drive unit for AF driving of a camera module according to an embodiment.
FIG. 7 is a view provided to explain a guide portion for AF driving of a camera module according to an embodiment.
FIG. 8 is a cross-sectional view of a camera module according to an embodiment.
FIG. 9 is a perspective view of a printed circuit board which is disposed on a base according to an embodiment.
FIG. 10 is a view provided to explain a housing according to an embodiment.
FIG. 11 is a view provided to explain a camera module including a base, a printed circuit board, and a housing according to an embodiment.
FIG. 12 is a cross-sectional view of the camera module of FIG. 11.
FIG. 13 is a block diagram of an electronic device in a network environment according to various embodiments.
FIG. 14 is a block diagram illustrating a camera module according to various embodiments.

Regarding explanation of the drawings, the same or similar reference numerals may be used for the same or similar components.

### [Mode for the Invention]

Hereinafter, various embodiments of the disclosure will be described with respect to the accompanying drawings. It should be appreciated that various embodiments are not intended to limit the disclosure to particular embodiments and include various modifications, equivalents, and/or alternatives of embodiments of the disclosure.

An electronic device according to various embodiments of the disclosure may include at least one of, for example, smartphones, tablet personal computers (PCs), mobile phones, video telephones, e-book readers, desktop personal computers (PCs), laptop personal computers (PCs), netbook computers, workstations, servers, personal digital assistants (PDAs), portable multimedia players (PMPs), Motion Picture Experts Group (MPEG-1 or MPEG-2) Audio Layer 3 (MP3) players, mobile medical devices, cameras, or wearable devices. According to various embodiments, the wearable devices may include at least one of accessories (for example, watches, rings, bracelets, ankle bracelets, necklaces, glasses, contact lenses, head-mounted-devices (HMDs), etc.), fabric- or clothing-mounted devices (for example, electronic apparels), body-mounted devices (for example, skin pads, tattoos, etc.), or bio-implantable circuits.

According to some embodiments, the electronic device may be a home appliance. The home appliance may include at least one of, for example, televisions (TVs), digital video disk (DVD) players, audios, refrigerators, air conditioners, cleaners, ovens, microwave ovens, washing machines, air cleaners, set-top boxes, home automation control panels, security control panels, TV boxes, game consoles, electronic dictionaries, electronic keys, camcorders, or electronic picture frames.

According to an embodiment, the electronic device may include at least one of medical devices (for example, various portable medical measurement devices (for example, a blood glucose monitoring device, a heartbeat measuring device, a blood pressure measuring device, a body temperature measuring device, and the like), a magnetic resonance angiography (MRA), a magnetic resonance imaging (MRI), a computed tomography (CT), scanners, and ultrasonic devices), navigation devices, global navigation satellite systems (GNSS), event data recorders (EDRs), flight data recorders (FDRs), vehicle infotainment devices, electronic equipment for vessels (for example, navigation systems and gyrocompasses), avionics, security devices, head units for vehicles, industrial or home robots, automatic teller's machines (ATMs) of financial institutions, points of sales (POSs) of stores, or Internet of things (for example, light bulbs, various sensors, electricity or gas meters, sprinkler devices, fire alarms, thermostats, street lamps, toasters, exercise equipment, hot water tanks, heaters, boilers, or the like).

According to an embodiment, the electronic device may include at least one of furniture, a part of buildings/structures, electronic boards, electronic signature receiving devices, projectors, or various measuring instruments (for example, water meters, electricity meters, gas meters, or wave meters). In various embodiments, the electronic device may be one or a combination of two or more devices of the above-mentioned devices. According to an embodiment, the electronic device may be a flexible electronic device. Also, the electronic device according to various embodiments of the disclosure is not limited to the above-mentioned devices, and may include new electronic devices according to technology development.

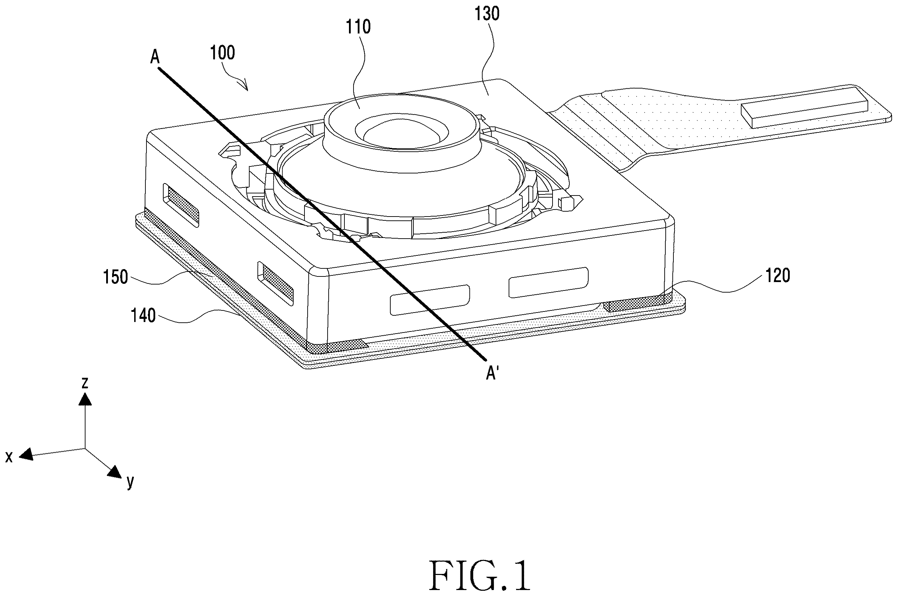

FIG. 1 is a perspective view of a camera module 100 according to an embodiment.

The camera module 100 according to an embodiment may include a lens assembly 110, a housing 120, a first drive unit (not shown) for auto focus (AF) driving of the camera module 100, an image sensor (not shown), and a printed circuit board 150 in which the image sensor is disposed. However, the components of the camera module 100 are not limited thereto. For example, the camera module 100 may omit at least one component of the above-described components or may further include at least one other component. For example, the camera module 100 may further include a cover 130 to cover at least a part of the housing 120, a base 140 on which the housing 120 is seated, and/or a second drive unit (not shown) for optic image stabilization (OIS) driving of the camera module 100.

According to an embodiment, the housing 120 and/or the cover 130 may form an exterior of the camera module 100. For example, the housing 120 may provide a frame for supporting other components. The shape of the housing 120 and/or the cover 130 may be deformed according to the shape of the camera module 100 or the shapes of components included in the camera module 100. For example, the housing 120 and/or the cover 130 may be a housing in a box-like shape. However, this should not be considered as limiting.

According to an embodiment, the cover 130 may cover at least a part of the housing 120. For example, the cover 130 may cover at least a part of a side surface (for example, a surface facing the x-axis or y-axis) of the housing 120, and an upper portion of the housing 120. However, this should not be considered as limiting. For example, the housing 120 may be a single member with the cover 130.

According to an embodiment, the cover 130 may form a space with the housing 120. A component included in the camera module 100 may be disposed in the space formed between the housing 120 and the cover 130. For example, at least a part of the lens assembly 110, at least one of the first drive unit for AF driving of the camera module 100 or the second drive unit for OIS driving of the camera module 100 may be disposed in the space. However, this should not be considered as limiting.

According to an embodiment, the lens assembly 110 may include at least one lens disposed to focus an image on a subject on the image sensor (not shown). The camera module 100 may receive light via the lens assembly 110. For example, light may enter the inside of the camera module 100 via at least a part of the at least one lens. For example, light may enter the inside of the camera module 100 in a first direction (for example, the - z-axis direction).

According to an embodiment, at least a part of the lens assembly 110 may be exposed to the outside of the camera module 100. For example, at least a part of the lens assembly 110 may be disposed to protrude from a top surface (for example, a surface facing the +z direction) of the housing 120 and/or the cover 130.

According to an embodiment, the lens assembly 110 may be disposed to be movable with respect to the housing 120 (or the cover 130). For example, the lens assembly 110 may be moved in the first direction (for example, the z-axis direction or -z-axis direction) with respect to the housing 120 by the first drive unit (not shown) for AF driving of the camera module 100. For example, the lens assembly 110 may be moved in at least one direction of a second direction (for example, the x-axis direction or -x-axis direction) or a third direction (for example, the y-axis direction or -y-axis direction) with respect to the housing 120 by the second drive unit (not shown) for OIS driving of the camera module 100. However, this should not be considered as limiting.

According to an embodiment, the housing 120 may be seated on the printed circuit board 150. For example, the housing 120 may be disposed on an upper portion (for example, above in the +z-axis direction) of the printed circuit board 150. The printed circuit board 150 may be disposed on an upper portion of the base 140. For example, at least a part of the housing 120 may be fixed to the base 140 on the upper portion of the base 140.

According to an embodiment, the image sensor may be disposed in the printed circuit board 150. For example, the image sensor may be coupled with the printed circuit board 150 and may be attached to the base 140.

According to an embodiment, the base 140 may include a plate shape. For example, the base 140 may be a rectangular plate. However, this should not be considered as limiting. According to an embodiment, the base 140 may include metal. For example, the base 140 may include at least one of a copper alloy or steel use stainless (SUS). However, this should not be considered as limiting.

According to an embodiment, the housing 120 may be disposed on the printed circuit board 150. For example, the printed circuit board 150 may be disposed between the housing 120 and the base 140. For example, at least a part of the housing 120 may be disposed on the printed circuit board 150 and the remaining part of the housing 120 may be disposed on the base 140. For example, at least a part of the housing 120 may be disposed on a top surface (for example, a surface facing the +z-axis direction) of the printed circuit board 150. The printed circuit board 150 may be electrically connected with the image sensor (not shown).

According to an embodiment, the printed circuit board 150 may include a plate shape. For example, at least a part of the printed circuit board 150 may be a rectangular shape. However, this should not be considered as limiting.

According to an embodiment, the printed circuit board 150 may be fixed to the base 140. For example, the printed circuit board 150 may be fixed to a top surface (for example, a surface facing the +z-axis direction) of the base 140.

According to an embodiment, the housing 120 may be fixed to at least one of the printed circuit board 150 or the base 140. For example, the housing 120 may be fixed to a top surface (for example, a surface facing the +z-axis direction) of the printed circuit board 150. For example, at least a part of the housing 120 may be fixed to the top surface of the printed circuit board 150, and the remaining part of the housing 120 may be fixed to the top surface of the base 140. However, this should not be considered as limiting.

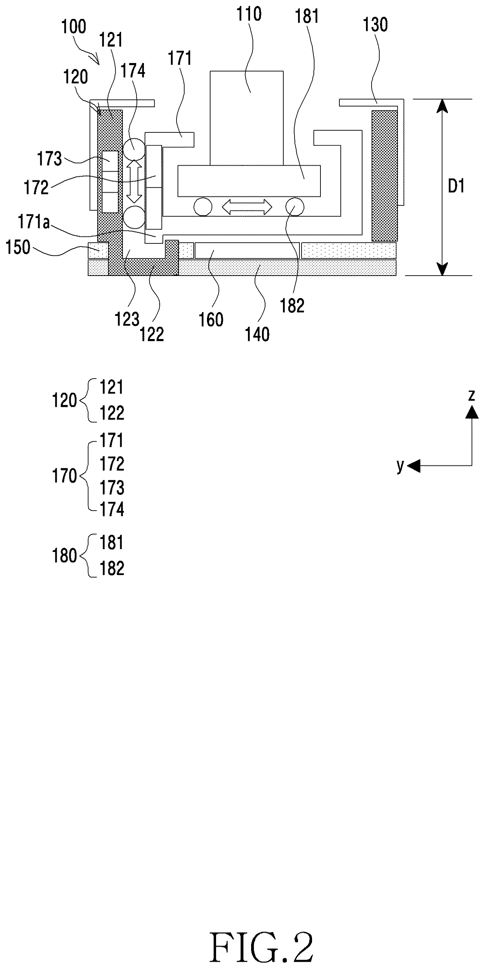

FIG. 2 is a view taken on line A-A' of FIG. 1, illustrating a camera module 100.

The camera module 100 of FIG. 2 may be referenced by the camera module 100 of FIG. 1. The same terminology and/or same reference numerals may be used for the same components or substantially the same components as those described above, and a redundant explanation thereof is omitted.

According to an embodiment, the camera module 100 may include a first drive unit 170 for an auto focus adjustment function. The first drive unit 170 may carry a lens assembly 110 in a first direction (for example, the z-axis direction or -z-axis direction). According to an embodiment, the first drive unit 170 may include an AF actuator configured to move the lens assembly 110 for the auto focus adjustment function. For example, the first drive unit 170 may move the lens assembly 110 in the first direction (for example, the z-axis direction or -z-axis direction) in which a distance between an image sensor 160 and the lens assembly 110 is changed for the auto focus adjustment function.

According to an embodiment, the first drive unit 170 may include a first carrier 171 and at least one first sphere 174. However, the components of the first drive unit 170 are not limited thereto. For example, the first drive unit 170 may omit at least one component of the above-described components, or may further include at least one other component. For example, the first drive unit 170 may further include at least one of a first magnet 172 or a first coil 173.

According to an embodiment, the first carrier 171 may carries at least a part of a second drive unit 180 that accommodates the lens assembly 110 in the first direction (for example, the z-axis direction or -z-axis direction). For example, the first carrier 171 may carry a second carrier 181 that accommodates the lens assembly 110 in the first direction. For example, the first carrier 171 may surround at least a part of the second carrier 181. For example, the first carrier 171 may surround at least a part of a side surface of the second carrier 181.

According to an embodiment, the at least one first sphere 174 may be disposed between the first carrier 171 and a housing 120. For example, the at least one first sphere 174 may be disposed between the first carrier 171 and a first side 121 of the housing 120. The at least one first sphere 174 may be disposed to allow the first carrier 171 to move in the first direction relative to the housing 120. For example, the at least one first sphere 174 may be disposed in a line along the first direction.

According to an embodiment, the first magnet 172 may be disposed on a first side (for example, a side facing the +y-axis direction) of the first carrier 171. The first magnet 172 may be disposed to face the first coil 173. The first coil 173 may be disposed in the housing 120 (for example, the first side 121 of the housing 120) facing the first side of the first carrier 171 in which the first magnet 172 is disposed. The first carrier 171 may be moved with respect to the housing 120 (or the base 140, the printed circuit board 150 or the image sensor 160) by a force of the first direction (for example, the z-axis direction or -z-axis direction) acting on the first magnet 172 due to a magnetic field generated by currents flowing through the first coil 173. As the first carrier 171 moves, the lens assembly 110 may move in the first direction. As the first carrier 171 moves, a distance from the image sensor 110 to the lens assembly 110 may be changed.

According to an embodiment, the first carrier 171 may include at least one first guide portion (not shown) to guide the at least one first sphere 174 to move in the first direction. For example, the first side of the first carrier 171 may include the at least one first guide portion. The at least one first guide portion may be formed in the first direction to allow the first carrier 171 to move in the first direction. For example, the first guide portion may have a guide groove or rail shape, but is not limited thereto.

According to an embodiment, the at least one first sphere 174 may be disposed on the at least one first guide portion. The at least one first guide portion may guide the at least one first sphere 174 to move in the first direction. For example, the at least one first sphere 174 may move, roll, rotate or tilt on the at least one first guide portion.

According to an embodiment, the at least one first sphere 174 may be guided along the at least one first guide portion, thereby carrying the first carrier 171 in the first direction (for example, the z-axis direction or -z-axis direction). When the first carrier 171 is carried in the first direction, at least a part (for example, the second carrier 181) of the second drive unit 180 disposed on the first carrier 171 may be carried in the first direction. The lens assembly 110 may be carried in the first direction by movement of the at least one part of the second drive unit 180. The housing 120 may include a guide portion formed at a position corresponding to the first guide portion of the first carrier 171 although it is not illustrated in FIG. 2.

According to an embodiment, the housing 120 may include a first portion 122 to form a space (for example, a recess 123) to selectively extend (for example, extend in the -z-axis direction) a region provided with at least a part of the first drive unit 170 for AF driving. For example, the housing 120 may include the first portion 122 that overlaps the printed circuit board 150 at least in part in a direction (for example, the y-axis or -y-axis direction) substantially perpendicular to the first direction, such that the recess 123 may be formed in the housing 120. For example, at least a part of the housing 120 may have a shape extended downwardly (for example, -z-axis direction), such that the recess 123 is formed. For example, the first portion 122 may form a step with at least other portion of the housing 120. For example, the first portion 122 may overlap the printed circuit board 150 at least in part in a direction (for example, the y-axis or -y-axis direction) substantially perpendicular to the first direction (for example, the z-axis or -z-axis direction).

According to an embodiment, the recess 123 may accommodate at least a part of the first drive unit 170. For example, the recess 123 may accommodate at least a part of the first side 171a of the first carrier 171. For example, the recess 123 may accommodate at least a part of the at least one first portion. For example, the recess 123 may accommodate one end (for example, one end in the -z-axis direction) of the at least one first guide portion. However, this should not be considered as limiting. For example, the recess 123 may further accommodate the at least one first sphere 174.

According to an embodiment, the recess 123 may be formed in the housing 120 to accommodate at least a part (for example, the first side 171a) of the first drive unit 170, such that a length of a drive range of the first drive unit 170 for AF driving in the first direction may be maintained and a position of the drive range may be lowered with respect to a reference position (for example, the base 140 or printed circuit board 150). Accordingly, a height (for example, a length D1 in the first direction) of the camera module may be reduced.

According to an embodiment, the housing 120 may include the first portion 122 which overlaps the printed circuit board 150 at least in part in the direction (for example, the y-axis or -y-axis direction) substantially perpendicular to the first direction (for example, the z-axis or -z-axis direction), such that the recess 123 may be formed to accommodate at least a part of the at least one first guide portion of the first carrier 171. For example, the recess 123 may be formed in the housing 120 to accommodate at least a part of the at least one first guide portion of the first carrier 171 at a position closer to the base 140 than at least other portion of the first carrier 171. For example, the recess 123 may accommodate at least a part (for example, one end of the first guide portion) of the at least one first guide portion of the first carrier 171 at a lower position in the -z-axis direction than at least other portion of the first carrier 171.

According to an embodiment, at least one width of the printed circuit board 150 in the direction in which the first portion 122 and the printed circuit board 150 overlap each other (for example, the y-axis or -y-axis direction) may be substantially the same as a width of the housing 120 in the direction in which the first portion 122 and the printed circuit board 150 overlap each other. For example, in the direction in which the first portion 122 and the printed circuit board 150 overlap each other, a width of the printed circuit board 150 of a portion where the first portion 122 and the printed circuit board 150 do not overlap each other may be substantially the same as the width of the housing 120. For example, in the direction in which the first portion 122 and the printed circuit board 150 overlap each other, the width of the printed circuit board 150 of the portion where the first portion 122 and the printed circuit board 140 do not overlap each other may be larger than or equal to the width of the housing 120. However, this should not be considered as limiting. For example, in the direction in which the first portion 122 and the printed circuit board 150 overlap each other, the width of the printed circuit board 150 of the portion where the first portion 122 and the printed circuit board 150 do not overlap each other may be smaller than or equal to the width of the housing 120.

According to an embodiment, to accommodate at least a part of the at least one first guide portion of the first carrier 171 at a position closer to the base 140 than at least other portion of the first carrier 171, the at least one part of the at least one first guide portion of the first carrier 171 may be disposed closer to the base 140 than at least other portion of the first carrier 171.

According to an embodiment, the recess 123 may accommodate at least a part of the first guide portion at a position closer to the base 140 than at least other portion of the first carrier 171, such that the height D1 of the camera module 100 in the first direction (for example, the z-axis direction or -z-axis direction) may be lowered. For example, the length in the first direction from a reference position (for example, the base 140 or the printed circuit board 150) to the top surface of a cover 130 (for example, a surface facing the +z-axis direction) may be reduced. For example, the length in the first direction from the reference position to the top surface of the cover 130 may be reduced by a length of the first portion 122 overlapping the printed circuit board 150 in the first direction. For example, the length in the first direction from the reference potion to the top surface of the cover 130 may be reduced by a thickness of the printed circuit board 150 in the first direction. However, this should not be considered as limiting.

For example, the recess 123 may accommodate at least a part of the first guide portion at a position closer to the base 140 than at least other portion of the first carrier 171, such that a length to a maximum point to which the first drive unit 170 is moved in the first direction (for example, the +z-axis direction) with respect to the reference position (for example, the base 140 or the printed circuit board 150) may be reduced. For example, a length from the reference position to the top surface (for example, a surface facing the +z-axis direction) of the first carrier in the first direction may be reduced. For example, a length from the reference position to one end (for example, one end of the first guide portion facing the +z-axis direction) of the first guide portion in the first direction may be reduced. For example, a length from the reference position to a maximum point to which the at least one first sphere 174 is moved in the first direction may be reduced. For example, the length from the reference position to the maximum point to which the first drive unit 170 is moved in the first direction (for example, the +z-axis direction) may be reduced by a length of the first portion 122 overlapping the printed circuit board 150 in the first direction. For example, the length from the reference position to the maximum point to which the first drive unit 170 is moved in the first direction (for example, the +z-axis direction) may be reduced by a thickness of the printed circuit board 150 in the first direction. However, this should not be considered as limiting.

According to an embodiment, the lens assembly 110 may move along with the first carrier 171. For example, the lens assembly 110 may be coupled with the second carrier 181, such that the lens assembly 110 may move along with the second carrier 181. For example, when the second carrier 181 moves in a second direction (for example, the x-axis direction or -x-axis direction), the lens assembly 110 may move in the second direction. For example, when the second carrier 181 moves in a third direction (for example, the y-axis or -y-axis direction), the lens assembly 110 may move in the third direction. For example, the second carrier 181 may be accommodated in the first carrier 171, such that, when the first carrier 171 moves in the first direction (for example, the z-axis direction or -z-axis direction), the second carrier 181 may move in the first direction and the lens assembly 110 may move in the first direction.

According to an embodiment, the camera module 100 may include the second drive unit 180 for an optic image stabilization function. The second drive unit 180 may carry the lens assembly 110 in the second direction (for example, the x-axis direction or -x-axis direction) and/or the third direction (for example, the y-axis direction or -y-axis direction). The second direction and the third direction may be different directions. According to an embodiment, the second drive unit 180 may include an OIS actuator configured to move the lens assembly 110 for optic image stabilization. For example, the second drive unit 180 may move the lens assembly 110 for optic image stabilization in a direction substantially perpendicular to the first direction (for example, the z-axis direction or -z-axis direction) in which a distance between the lens assembly 110 and the image sensor 160 is changed.

According to an embodiment, the second drive unit 180 may include the second carrier 181 to carry the lens assembly 110 in the second direction (for example, the x-axis direction or -x-axis direction) and/or the third direction (for example, the y-axis direction or -y-axis direction). For example, the lens assembly 110 may be coupled to the second carrier 181. However, this should not be considered as limiting.

According to an embodiment, a second magnet (not shown) may be disposed on a first side (for example, a side facing the second direction) of the second carrier 181. The second magnet may be disposed to face a second coil (not shown). The second coil may be disposed in the housing 120 facing the first side of the second carrier 181 in which the second magnet is disposed. The second carrier 181 may be moved with respect to the housing 120 (or the base 140, the printed circuit board 150 or the image sensor 160) by a force of the second direction (for example, the x-axis direction or -x-axis direction) acting on the second magnet due to a magnetic field generated by currents flowing through the second coil. As the second carrier 181 moves, the lens assembly 110 may move in the second direction.

According to an embodiment, a third magnet (not shown) may be disposed on a second side (for example, a side facing the third direction) of the second carrier 181. The third magnet may be disposed to face a third coil (not shown). The third coil may be disposed in the housing 120 facing the second side of the second carrier 181 in which the third magnet is disposed. The second carrier 181 may be moved with respect to the housing 120 (or the base 140, the printed circuit board 150 or the image sensor 160) by a force of the third direction (for example, the y-axis direction or -y-axis direction) acting on the third magnet due to a magnetic field generated by currents flowing through the third coil. As the second carrier 181 moves, the lens assembly 110 may move in the third direction.

According to an embodiment, the first side of the second carrier 181 may be substantially perpendicular to the second side of the second carrier 181. The second magnet may be disposed to be substantially perpendicular to the third magnet. The second coil may be disposed to be substantially perpendicular to the third coil.

According to an embodiment, the first side of the second carrier 181 may be substantially perpendicular to the first side (for example, a side facing the y-axis direction) of the first carrier 171 on which the first magnet 172 (or the at least one first sphere 174) is disposed. The second magnet may be disposed to be substantially perpendicular to the first magnet 172. The second coil may be disposed to be substantially perpendicular to the first coil 173. The third magnet may be disposed on the opposite side of the first magnet 172. The third magnet may be disposed substantially in parallel with the first magnet 172. The third coil may be disposed on the opposite side of the first coil 173. The third coil may be disposed substantially in parallel with the first coil 173. However, this should not be considered as limiting. For example, the second magnet and the third magnet may be disposed to be substantially perpendicular to the first magnet 172, and the second magnet may be disposed on the opposite side of the third magnet. For example, the second coil and the third coil may be disposed to be substantially perpendicular to the first coil 173, and the second coil may be disposed substantially in parallel with the third coil.

According to an embodiment, the second drive unit 180 for OIS driving may include the second carrier 181 coupled with the lens assembly 110, and a third carrier (not shown) to carry the second carrier 181 in the third direction (for example, the y-axis direction or -y-axis direction). For example, the second carrier 181 may be disposed on the third carrier, such that the second carrier 181 may be carried in the third direction in response to the third carrier moving in the third direction. For example, the second carrier 181 and/or the third carrier may move in the second direction and/or the third direction by at least one sphere 182 disposed between the second carrier 181 and the first carrier 171.

According to an embodiment, when the second drive unit 180 further includes the third carrier, at least one third sphere (not shown) may be disposed between the second carrier 181 and the third carrier. The second carrier 181 may move on the third carrier by the at least one third sphere. For example, the second carrier 181 may move on the third carrier by the at least one third sphere in the second direction (for example, the x-axis direction or -x-axis direction) with respect to the housing 120 (or the base 140, the printed circuit board 150, the image sensor 160). However, this should not be considered as limiting. For example, the third carrier and the at least one third sphere may be omitted from the camera module according to an embodiment.

According to an embodiment, when the second drive unit 180 further includes the third carrier, at least one of the second carrier 181 or the third carrier may include at least one third guide portion (not shown) to guide the at least one third sphere to move in the second direction. The at least one third sphere may be disposed on the at least one third guide portion. The at least one third sphere disposed between the second carrier 181 and the third carrier may be guided (for example, move, roll, rotate, or tilt) along the at least one third guide portion, such that the second carrier 181 may move in the second direction. When the second carrier 181 moves in the second direction, the lens assembly 110 accommodated in the second carrier 181 may move in the second direction together.

According to an embodiment, at least one fourth sphere (not shown) may be disposed between the first carrier 171 and the third carrier. The third carrier may move on the first carrier 171 by the at least one fourth sphere. For example, the third carrier may move on the first carrier 171 by the at least one fourth sphere in the third direction (for example, the y-axis direction or -y-axis direction) with respect to the housing 120 (or the base 140, the printed circuit board 150, the image sensor 160).

According to an embodiment, at least one of the first carrier 171 or the third carrier may include at least one fourth guide portion (not shown) to guide the at least one fourth sphere to move in the third direction. The at least one fourth sphere may be disposed on the at least one fourth guide portion. The at least one fourth sphere disposed between the first carrier 171 and the third carrier may be guided (for example, move, roll, rotate, or tilt) along the at least one fourth guide portion, such that the third carrier may move in the third direction. When the third carrier moves in the third direction, the second carrier 181 accommodated in the third carrier may be carried in the third direction together. When the second carrier 181 moves in the third direction, the lens assembly 110 accommodated in the second carrier 181 may be carried in the third direction together.

According to an embodiment, at least one of the at least one third guide portion (not shown) or the at least one fourth guide portion (not shown) may have a guide groove or rail shape, but is not limited thereto. For example, the at least one third guide portion may be formed in the second direction to allow the at least one third sphere to be guided along the second direction. For example, the at least one fourth guide portion may be formed in the third direction to allow the at least one fourth sphere to be guided along the third direction.

In the disclosure, guiding may include moving, rolling, rotating, or tilting.

According to an embodiment, at least one of the first carrier 171 or the second carrier 181 may be opened in the first direction. For example, at least one of the first carrier 171 or the second carrier 181 may have a space formed in a portion corresponding to the image sensor 160. For example, at least one of the first carrier 171 or the second carrier 181 may have an opening formed in a portion corresponding to the image sensor 160. For example, when at least one of the first carrier 171 or the second carrier 181 is viewed from above (for example, in the -z-axis direction), the image sensor 160 may be seen.

According to an embodiment, at least one of the housing 120 or the cover 130 may restrict a movement range of the drive unit of the camera module. For example, at least one of a side of the housing 120 or a side of the cover 130 may restrict a movement range of the second drive unit 180 in at least one direction of the second direction (for example, the x-axis direction or -x-axis direction) or the third direction (for example, the y-axis direction or -y-axis direction). For example, the cover 130 may restrict a movement range of the first drive unit 170 in the first direction (for example, the x-axis direction or -x-axis direction).

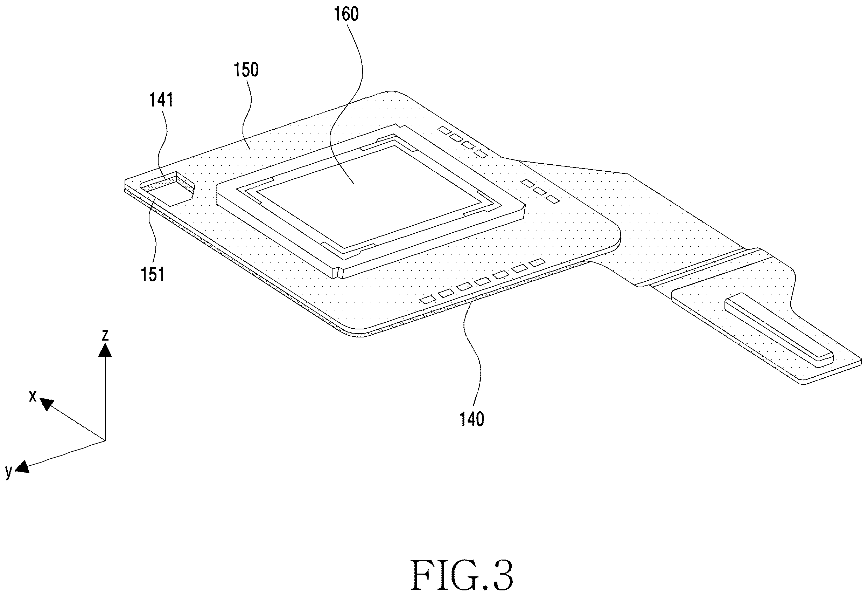

FIG. 3 is a perspective view of a printed circuit board 150 according to an embodiment.

A base 140, the printed circuit board 150 and an image sensor of FIG 3 may be referenced by the base 140, the printed circuit board 150, and the image sensor 150 of FIGS. 1 and 2. The same terminology and/or same reference numerals may be used for the same components or substantially the same components as those described above, and a redundant explanation thereof is omitted.

According to an embodiment, the image sensor 160 may convert light passing through a lens assembly (for example, the lens assembly 110 of FIG. 1) into an electrical signal. For example, the image sensor 160 may convert light received through at least one lens into an electrical signal.

Referring to FIG. 3, the image sensor 160 may be disposed on the printed circuit board 150. For example, the image sensor 160 may be fixed to the printed circuit board 150. The image sensor 160 may be disposed on the printed circuit board 150, such that the lens assembly (for example, the lens assembly 110 of FIG. 1) may be moved with respect to the image sensor 160 and/or the printed circuit board 150.

According to an embodiment, the printed circuit board 150 may include a first opening 151 opened in a first direction (for example, the +z-axis direction or -z-axis direction). For example, the first opening 151 may be disposed on a portion corresponding to a first portion (for example, the first portion 122 of FIG. 2) of a housing (for example, the housing 120 of FIG. 2). For example, the first opening 151 may be disposed on a portion overlapping at least one first guide portion in the first direction. For example, the first opening 151 may accommodate at least a part of the first portion 122 of the housing 120.

According to an embodiment, the base 140 may include a second opening 141 opened in the first direction. For example, the second opening 141 may be disposed on a portion corresponding to the first portion 122 of the housing 120. For example, the second opening 141 may be disposed on a portion overlapping at least one first guide portion in the first direction. For example, the second opening 141 may accommodate the remaining part of the first portion 122 of the housing 120.

According to an embodiment, the first opening 151 may have substantially the same shape as the second opening 141. However, this should not be considered as limiting. For example, at least one of the first opening 151 or the second opening 141 may have a polygonal shape. However, this should not be considered as limiting.

According to an embodiment, the first opening 151 may be disposed (or formed) to be adjacent to one corner of the printed circuit board 150. For example, the first opening 151 may be disposed between one corner of the printed circuit board 150 and one corner of the image sensor 160. However, this should not be considered as limiting.

According to an embodiment, the second opening 141 may be disposed (or formed) to be adjacent to one corner of the base 140. However, this should not be considered as limiting.

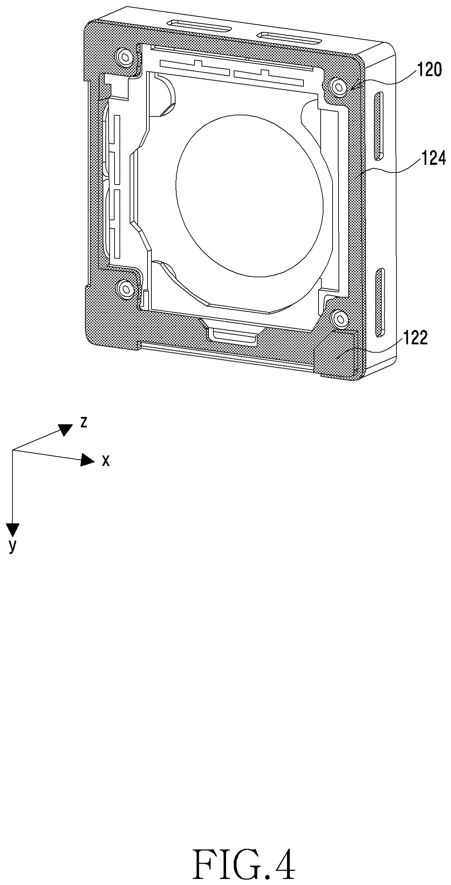

FIG. 4 is a view provided to explain a housing 120 according to an embodiment.

The housing 120 of FIG. 4 may be referenced by the housing 120 of FIGS. 1 to 3. The same terminology and/or same reference numerals may be used for the same components or substantially the same components as those described above, and a redundant explanation thereof is omitted.

Referring to FIG. 4, the housing 120 according to an embodiment may include a first portion 122. The first portion 122 may be disposed to be adjacent to one corner of the housing 120. However, this should not be considered as limiting.

According to an embodiment, the first portion 122 may include a protrusion protruding from a portion of the housing 120. For example, the first portion 122 may include a protrusion protruding from a bottom surface 124 of the housing 120 that faces a printed circuit board (for example, the printed circuit board 150 of FIG. 3). For example, the protrusion may protrude from the bottom surface 124 of the housing 120 in the -z-axis direction.

According to an embodiment, the protrusion may have a shape corresponding to at least one of a first opening (for example, the first opening 151 of FIG. 3) or a second opening (for example, the second opening 141 of FIG. 3). For example, at least a part of the protrusion may correspond to the first opening, and the remaining part of the protrusion may have a shape corresponding to the second opening. For example, the protrusion may have a polygonal shape. However, this should not be considered as limiting.

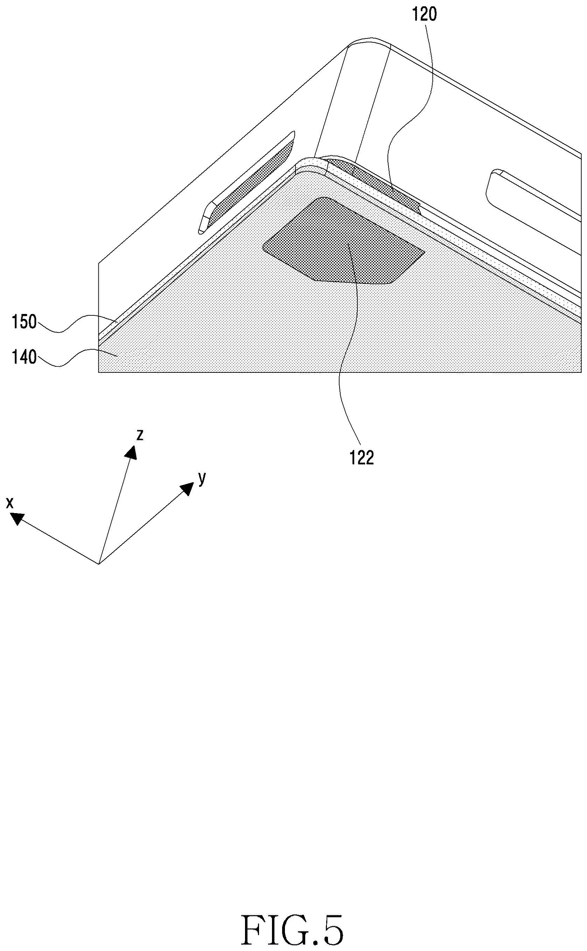

FIG. 5 is a view illustrating a housing 120 which is disposed on a printed circuit board 150 and a base 140 according to an embodiment.

Components of FIG. 5 may be referenced by the above-described components. The same terminology and/or same reference numerals may be used for the same components or substantially the same components as those described above, and a redundant explanation thereof is omitted.

According to an embodiment, a first portion 122 of the housing 120 may overlap the printed circuit board 150 and the base 140 at least in part in a direction (for example, the x-axis direction, the -x-axis direction, the y-axis direction, and/or -y-axis direction) that is substantially perpendicular to a first direction (for example, the z-axis direction or -z-axis direction). For example, the first portion 122 of the housing 120 may be accommodated in (or inserted into) a first opening (for example, the first opening 151 of FIG. 3) and a second opening (for example, the second opening 141 of FIG. 3). For example, a protrusion may be accommodated in the first opening 151 and the second opening 141. For example, at least a part of the protrusion may be accommodated in the first opening 151, and the remaining part of the protrusion may be accommodated in the second opening 141.

According to an embodiment, the first portion 122 may penetrate through at least a part of the first opening 151 or the second opening 141. For example, the protrusion may penetrate through at least a part of the first opening 151 or the second opening 141.

According to an embodiment, at least a part of the first portion 122 may form substantially the same surface as the bottom surface of the base 140 (for example, a surface facing the -z-axis direction). For example, one end of the protrusion may form substantially the same surface as the bottom surface of the base 140. However, this should not be considered as limiting.

According to an embodiment, the first portion 122 (for example, the protrusion) of the housing 120 may be accommodated in (or inserted into) the first opening (for example, the first opening 151 of FIG. 3) and the second opening (for example, the second opening 141 of FIG. 3), such that movement of the housing 120 in a direction (for example, the x-axis direction, -x-axis direction, y-axis direction and/or -y-axis direction) substantially perpendicular to the first direction may be restricted.

According to an embodiment, at least one width of the printed circuit board 150 in a direction (for example, the y-axis, -y-axis direction, x-axis direction and/or -x-axis direction) in which the first portion 122 and the printed circuit board 150 overlap each other may be substantially the same as a width of the housing 120 in the direction in which the first portion 122 and the printed circuit board 150 overlap each other. For example, in the direction in which the first portion 122 and the printed circuit board 150 overlap each other, a width of the printed circuit board 150 of a portion where the first portion 122 and the printed circuit board 150 do not overlap each other may be substantially the same as the width of the housing 120. For example, in the direction in which the first portion 122 and the printed circuit board 150 overlap each other, the width of the printed circuit board 150 of the portion where the first portion 122 and the printed circuit board 150 do not overlap each other may be larger than or equal to the width of the housing 120. However, this should not be considered as limiting. For example, in the direction in which the first portion 122 and the printed circuit board 150 overlap each other, the width of the printed circuit board 150 of the portion where the first portion 122 and the printed circuit board 150 do not overlap each other may be smaller than or equal to the width of the housing 120.

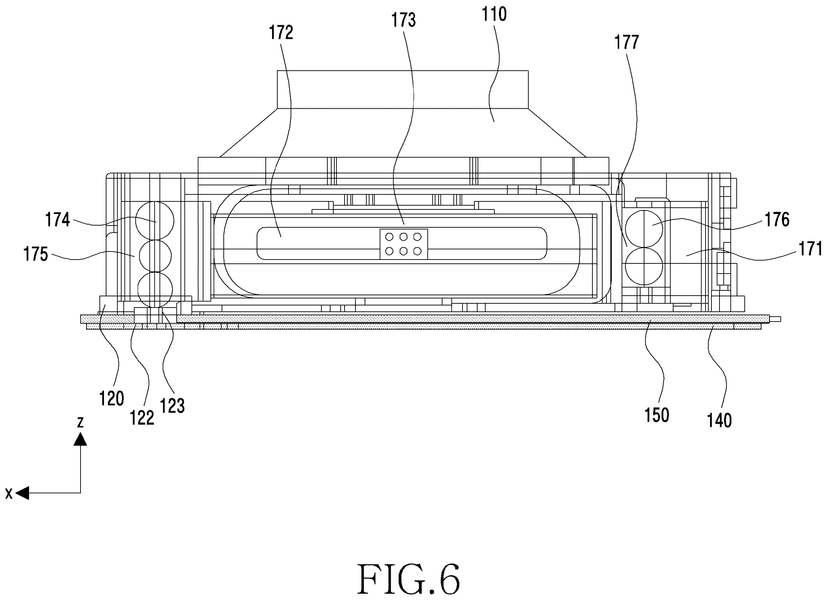

FIG. 6 is a view provided to explain a drive unit for AF driving of a camera module according to an embodiment.

According to an embodiment, a first drive unit (for example, the first drive unit 170 of FIG. 2) may further include at least one second sphere 176. The at least one second sphere 176 may be disposed between a first carrier 171 and a housing 120. For example, the at least one second sphere 176 may be disposed between the first carrier 171 and a first side surface (for example, the first side 121 of FIG. 2) of the housing 120. The at least one second sphere 176 may be disposed to allow the first carrier 171 to move in a first direction (for example, the z-axis or -z-axis direction) relative to the housing 120. For example, the at least one second sphere 176 may be disposed in a line along the first direction. For example, the at least one second sphere 176 may be disposed in a line with (or substantially in parallel with) a first sphere 174.

According to an embodiment, the at least one second sphere 176 may be disposed to be spaced apart from the at least one first sphere 174 by a predetermined distance. For example, the at least one first sphere 174 may be disposed in one edge of the first carrier 171, and the at least one second sphere 176 may be disposed in another edge of the first carrier 171. For example, the at least one first sphere 174 may be disposed to be adjacent to one end of the first side of the first carrier 171, and the at least one second sphere 176 may be disposed to be adjacent to the other end of the first side of the first carrier 171.

According to an embodiment, the size of the at least one first sphere 174 may have a first size. The size of the at least one second sphere 176 may have a second size. The second size may be substantially the same as or smaller than the first size. However, this should not be considered as limiting. For example, the second size may be larger than the first size.

According to an embodiment, the number of first spheres disposed between the first carrier 171 and the housing 120 may be same as or different from the number of second spheres 176.

According to an embodiment, the first carrier 171 may further include at least one second guide portion 177 to guide the at least one second sphere 176 to move in the first direction (for example, the z-axis direction or -z-axis direction). For example, a first side (for example, a side facing the y-axis direction) of the first carrier 171 may further include at least one second guide portion 177. The at least one second guide portion 177 may be formed in the first direction to allow the first carrier 171 to move in the first direction. For example, the at least one second guide portion 177 may have a guide groove or rail shape, but is not limited thereto.

According to an embodiment, the at least one second sphere 176 may be disposed on the at least one second guide portion 177. The at least one second guide portion 177 may guide the at least one second sphere 176 to move in the first direction. For example, the at least one second sphere 176 may move, roll, rotate, or tilt on the at least one second guide portion 177.

According to an embodiment, the at least one second sphere 176 may be guided along the at least one second guide portion 177, such that the first carrier 171 may be carried in the first direction. When the first carrier 171 is carried in the first direction, at least a part (for example, the second carrier 181 of FIG. 2) of a second drive unit (for example, the second drive unit 180 of FIG. 2) disposed in the first carrier 171 may be carried in the first direction. The lens assembly 110 may be carried in the first direction by movement of the at least one part of the second drive unit. The housing 120 may further include a guide portion formed at a position corresponding to the at least one second guide portion 177 of the first carrier 171.

According to an embodiment, the at least one second guide portion 177 may be disposed to be spaced apart from at least one first guide portion 175 by a predetermined distance. For example, the at least one first guide portion 175 may be disposed (or formed) on one edge of the first carrier 171, and the at least one second guide portion 177 may be disposed (or formed) on another edge of the first carrier 171. For example, the at least one first guide portion 175 may be disposed (or formed) to be adjacent to one end of a first side (for example, a side facing the y-axis direction) of the first carrier 171, and the at least one second guide portion 177 may be disposed (or formed) to be adjacent to the other end of the first side of the first carrier 171. According to an embodiment, a first magnet 171 and/or a first coil 173 may be disposed between the at least one first guide portion 175 and the at least one second guide portion 177.

According to an embodiment, the at least one first guide portion 175 may have a first length in the first direction (for example, the z-axis direction or -z-axis direction). The at least one second guide portion 177 may have a second length in the first direction. For example, the second length may be smaller than or equal to the first length. However, this should not be considered as limiting.

According to an embodiment, when the first drive unit 170 includes the at least one first guide portion 175 and the at least one second guide portion 177, the first portion 122 of the housing 120 may be disposed (or formed) in a region corresponding to the at least one first guide portion 175. The first portion 122 may be disposed (or formed) in the region corresponding to the at least one first guide portion 175, such that the first length of the first guide portion 175 may be equal to or larger than the second length of the second guide portion 177.

According to an embodiment, the housing 120 may include the first portion 122 which overlaps the printed circuit board 150 at least in part in a direction (for example, the y-axis or -y-axis direction) substantially perpendicular to the first direction (for example, the z-axis or -z-axis direction). For example, the housing 120 may have a shape extended downwardly (for example, -z-axis direction). The housing 120 may include the first portion 122, such that a recess 123 may be formed in the housing 120.

According to an embodiment, the recess 123 may accommodate at least a part of the at least one first guide portion 175. For example, the recess 123 may accommodate one end (for example, one end in the -z-axis direction) of the at least one first guide portion 175. However, this should not be considered as limiting. For example, the recess 123 may further accommodate the at least one first sphere 174.

According to an embodiment, the housing 120 may include the first portion 122 which overlaps the printed circuit board 150 at leas tine part in the direction (for example, y-axis or -y-axis direction) substantially perpendicular to the first direction (for example, the z-axis or -z-axis direction), such that the recess 230 may be formed to accommodate at least a part of the at least one first guide portion 175 of the first carrier 171 at a position closer to the base 140 than at least a part of the at least one second guide portion 177 of the first carrier 171. For example, the recess 123 may accommodate at least a part of the at least one first guide portion 175 (for example, one end of the first guide portion) of the first carrier 177 at a lower position in the -z-axis direction than at least a part of the at least one second guide portion 177 of the first carrier 171.

According to an embodiment, the recess 123 may accommodate at least a part of the first guide portion 175 at a position closer to the base 140 than at least a part of the at least one second guide portion 177 of the first carrier 171, such that a height (for example, the length D1 of FIG. 2) of the camera module 100 in the first direction (for example, the z-axis direction or -z-axis direction) may be lowered.

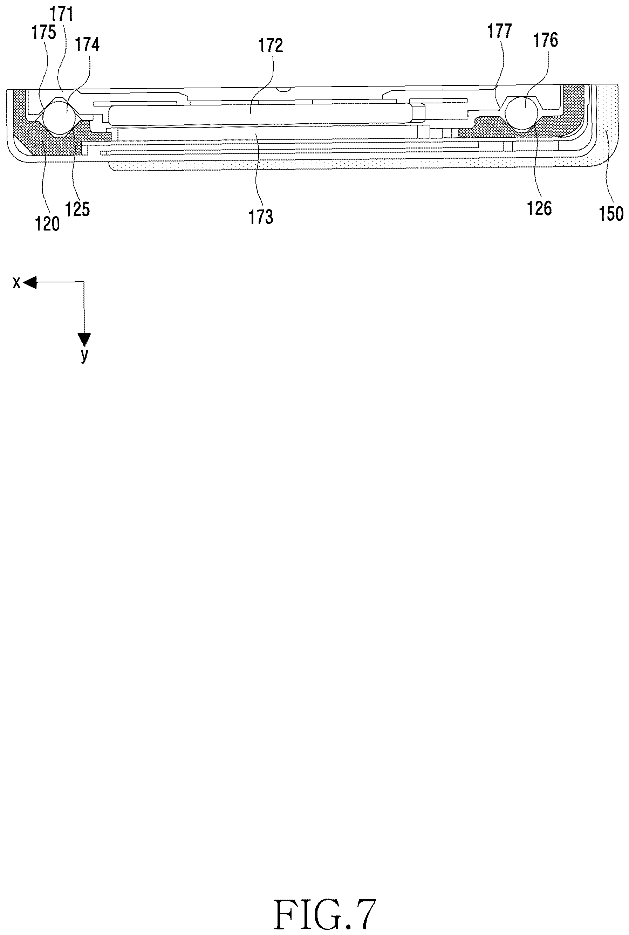

FIG. 7 is a view provided to explain a guide portion for AF driving of a camera module according to an embodiment.

Components of FIG. 7 may be referenced by the components of FIGS. 1 to 6. The same terminology and/or same reference numerals may be used for the same components or substantially the same components as those described above, and a redundant explanation thereof is omitted.

According to an embodiment, the number of contact points of at least one first guide portion 175 contacting at least one first sphere 174 may be substantially the same as or larger than the number of contact points of at least one second guide portion 177 contacting at least one second sphere 176. For example, the at least one first guide portion 175 may include a 'V'-shaped groove, and the at least one second guide portion 177 may include a 'U'-shaped groove. For example, the cross-section of the at least one first guide portion 175 may have a 'V'-shape, and the cross section of the at least one second guide portion 177 may have a 'U'-shape. However, this should not be considered as limiting. For example, at least one fifth guide portion 125 of the housing 120 that faces the first guide portion 175 and contacts the at least one first sphere 174 may include a 'V'-shaped groove, and the at least one first guide portion 175 may include a 'V'-shaped groove. At least one sixth guide portion 126 of the housing 120 that faces the second guide portion 177 and contacts the at least one second sphere 176 may include a 'U'-shaped groove, and the at least one second guide portion 177 may include a 'V'-shaped groove.

According to an embodiment, when the first drive unit 170 includes the at least one first guide portion 175 and the at least one second guide portion 177, a first portion (for example, the first portion 122 of FIG. 6) of the housing 120 may be disposed (or formed) in a region corresponding to the at least one first guide portion 175. For example, when the housing 120 includes the at least one fifth guide portion 125 and the at least one sixth guide portion 126, the first portion (for example, the first portion 122 of FIG. 6) of the housing 120 may be disposed (or formed) in a region corresponding to the at least one fifth guide portion 125.

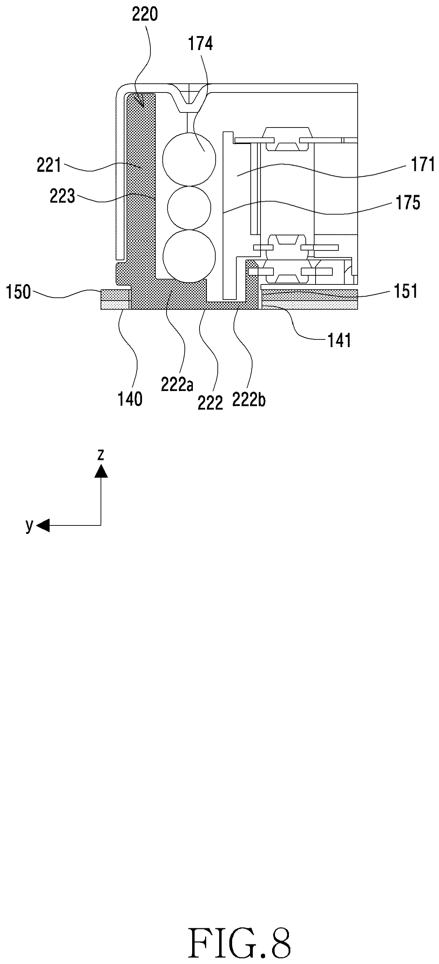

FIG. 8 is a cross-sectional view of a camera module according to an embodiment.

The camera module of FIG. 8 and components thereof may be referenced by the camera module of FIGS. 1 to 7 and the components thereof. The same terminology and/or same reference numerals may be used for the same components or substantially the same components as those described above, and a redundant explanation thereof is omitted.

Referring to FIG. 8, a housing 220 according to an embodiment may include a first portion 222 which overlaps at least one of a printed circuit board 150 or a base 140 in a direction (for example, the y-axis direction or -y-axis direction) substantially perpendicular to a first direction (for example, the z-axis direction or -z-axis direction).

According to an embodiment, the first portion 222 may include a step. For example, the first portion 222 may include a first part 222b and a second part 222a which forms a step relative to the first part 222b. For example, the second part 222a may be disposed (formed) over the first part 222b in the +z direction. For example, the first part 222b may be disposed closer to the base 140 than the second part 222a. For example, the first part 222b may overlap the base 140 in the direction (for example, the y-axis direction or -y-axis direction) substantially perpendicular to the first direction (for example, the z-axis direction or -z-axis direction). For example, the second part 222a may overlap the printed circuit board 150 and the base 140 in the direction (for example, the y-axis direction or -y-axis direction) substantially perpendicular to the first direction (for example, the z-axis direction or -z-axis direction). For example, the second part 222a may be disposed in a first opening 151 and a second opening 141, and the first part 222b may be disposed in the second opening 141. However, this should not be considered as limiting.

According to an embodiment, the first portion 222 may include the step, such that positions of components of a first drive unit 170 may be different. For example, a first space may be formed by the first part 222b and the second part 222a. At least a part of the first drive unit 170 (for example, at least a part of the first carrier 171) may be disposed in the first space. For example, at least a part (for example, one end of the at least one first guide portion 175 that faces the -z-axis direction) of the at least one first guide potion 175 may be disposed in the first space formed by the first part 222b and the second part 222a. For example, a second space may be formed by at least a part (for example, the fifth guide portion 223) of a first side 221 of the housing 220, the second part 222a and the first guide portion 175. At least other part of the first drive unit 170 may be disposed in the second space. For example, at least one first sphere 174 may be disposed in the second space.

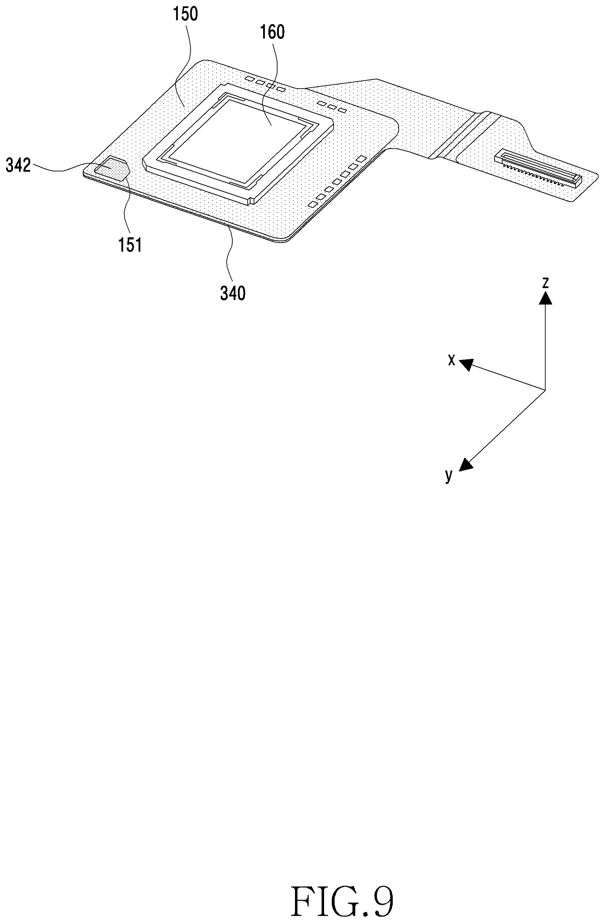

FIG. 9 is a perspective view of a printed circuit board 150 which is disposed on a base 340 according to an embodiment.

The printed circuit board 150 and an image sensor 160 of FIG. 9 may be referenced by the printed circuit board 150 and the image sensor 160 of FIG. 3. The same terminology and/or same reference numerals may be used for the same components or substantially the same components as those described above, and a redundant explanation thereof is omitted.

According to an embodiment, the printed circuit board 150 may include a first opening 151. For example, compared to the base 140 of FIG. 3, the base 340 according to an embodiment may not include a second opening (for example, the second opening 141 of FIG. 3). For example, when the printed circuit board 150 is disposed on the base 140, at least a part of the base 140 may be seen through the first opening 151. For example, when the printed circuit board 150 is disposed on the base 140, at least a part 342 of one surface of the base 140 that faces the printed circuit board 150 may be seen through the first opening 151.

According to an embodiment, a recess may be formed by the first opening 151 and the at least one part 342 of the base 140.

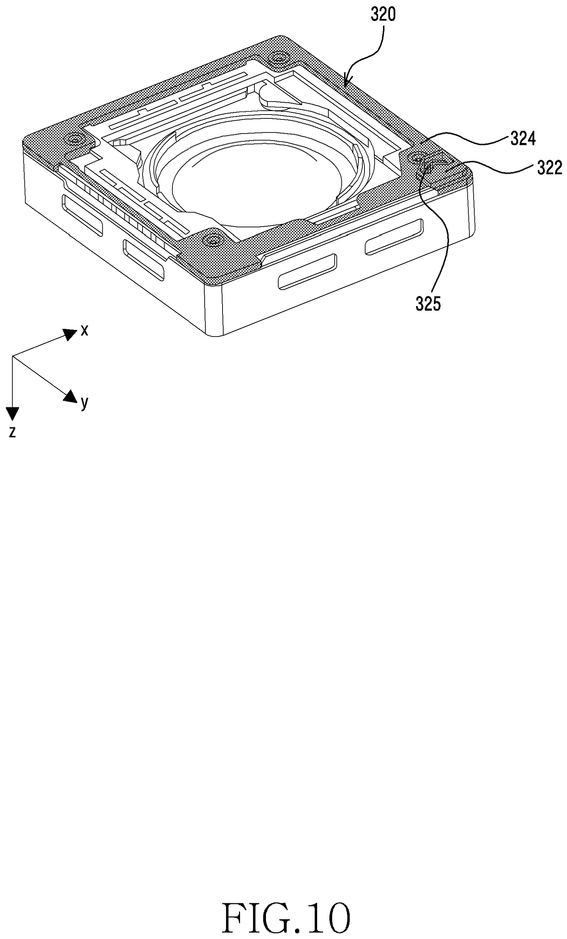

FIG. 10 is a view provided to explain a housing 320 according to an embodiment.

The housing 320 of FIG. 10 may be referenced by the housing 120 of FIGS. 1 to 7 and/or the housing 220 of FIG. 8. The same terminology and/or same reference numerals may be used for the same components or substantially the same components as those described above, and a redundant explanation thereof is omitted.

Referring to FIG. 10, the housing 320 according to an embodiment may include a first portion 322. The first portion 322 may be disposed to be adjacent to one corner of the housing 320. However, this should not be considered as limiting.

According to an embodiment, the first portion 322 may include a protrusion protruding from a portion of the housing 320. For example, the first portion 322 may include a protrusion protruding from a bottom surface 324 of the housing 320 that faces a printed circuit board (for example, the printed circuit board 150 of FIG. 9). For example, the protrusion may protrude from the bottom surface 324 of the housing 320 in the -z-axis direction.

According to an embodiment, at least a part of the first portion 322 may form substantially the same surface with the printed circuit board (for example, the printed circuit board 150 of FIG. 9) facing a base (for example, the base 340 of FIG. 9). For example, the first portion 322 may penetrate through a first opening (for example, the first opening 151 of FIG. 9) and may face the base 340 (for example, at least a part 342 of the base 340).

According to an embodiment, the first portion 322 may contact the base 340. For example, the first portion 322 may contact at least a part 342 of the base 340. For example, the first portion 322 may be fixed to the at least one part 342 of the base 340. For example, the first portion 322 may be fixed to the at least one part 342 of the base 340 by using an adhesive. However, this should not be considered as limiting.

According to an embodiment, the first portion 322 may include at least one accommodation recess 325 which is recessed in the opposite direction of the protruding direction of the protrusion (for example, the -z-axis direction). According to an embodiment, the at least one part 342 of the base (for example, the base 340 of FIG. 9) facing the first portion 322 may include at least one protrusion (not shown) accommodated in the at least one accommodation recess 325. The at least one protrusion may be accommodated in the at least one accommodation recess 325, such that the housing 320 may be fixed to the base (for example, the base 340 of FIG. 9). However, this should not be considered as limiting. For example, the first portion 322 may include at least one protrusion, and the base 340 (for example, the at least one part 342 of the base 340) may include at least one accommodation recess to accommodate the at least one protrusion.

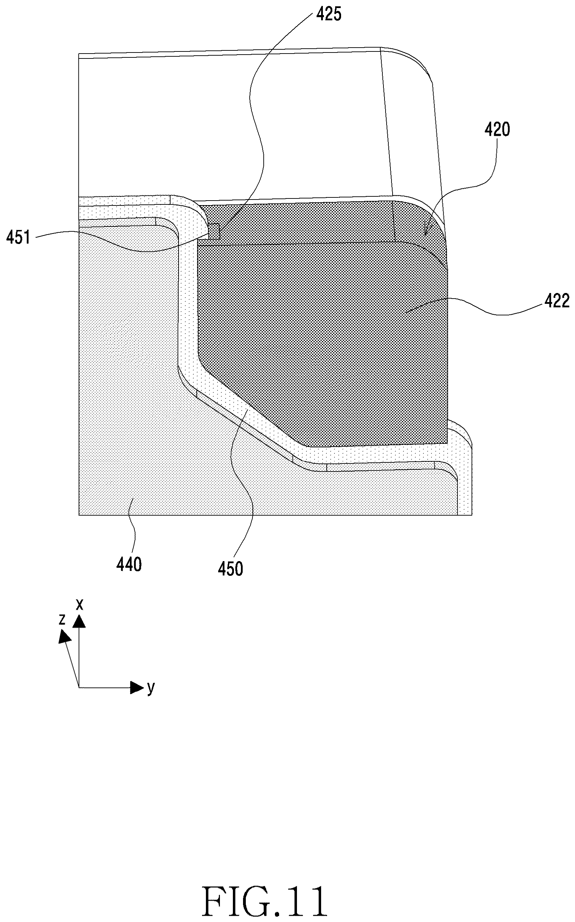

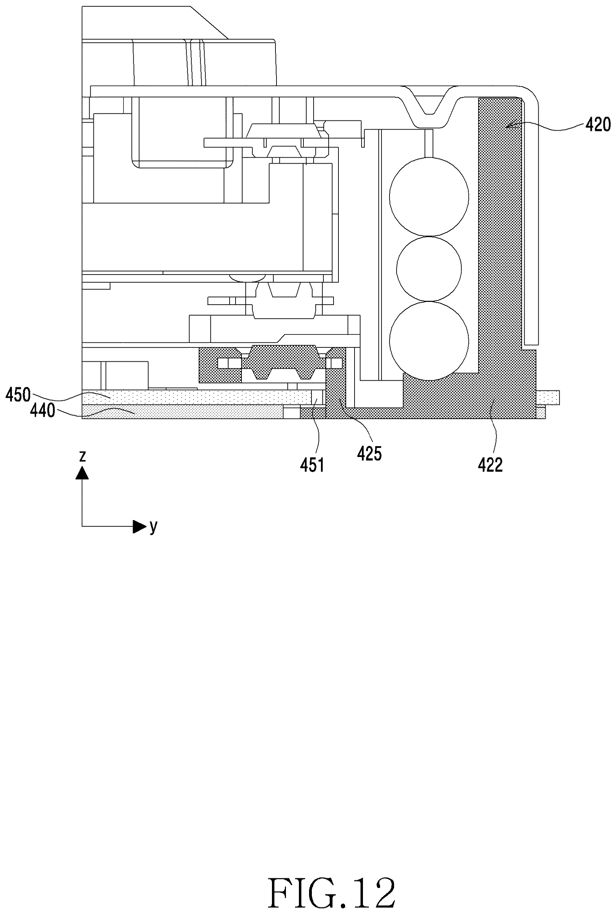

FIG. 11 is a view provided to explain a camera module including a base 440, a printed circuit board 450, and a housing 420 according to an embodiment. FIG. 12 is a cross-section view of the camera module of FIG. 11.

The camera module of FIGS. 11 and 12 and components thereof may be referenced by the camera module of FIGS. 1 to 10 and the components thereof. The same terminology and/or same reference numerals may be used for the same components or substantially the same components as those described above, and a redundant explanation thereof is omitted.

Referring to FIG. 11, at least a part of a first portion 422 according to an embodiment may be disposed to surround at least a part of the base 440 and/or the printed circuit board 450. For example, the at least one part of the first portion 422 may be disposed to surround at least a part of one end of the base 440 and an edge of the printed circuit board 450.

Referring to FIGS. 11 and 12, the first portion 422 of the housing 420 according to an embodiment may include at least one recess 425 to accommodate at least a part of an edge 451 of the printed circuit board 450. The at least one recess 425 may be recessed in a direction substantially perpendicular to a first direction (for example, the z-axis direction or -z-axis direction). For example, the at least one recess 425 may have a rail or groove shape formed along at least a part of the edge 451 of the printed circuit board 450. However, this should not be considered as limiting.

According to an embodiment, the at least one part of the edge 451 of the printed circuit board 450 may be accommodated in (or inserted into) the at least one recess 425, such that movement of the housing 420 in the first direction may be restricted, and the housing 420 may be fixed to the printed circuit board 450. However, this should not be considered as limiting. For example, the at least one recess 425 may accommodate at least a part of an edge of the base 440.

According to an embodiment, at least a part of the first portion 422 may form substantially the same surface as the bottom surface of the base 440 (for example, a surface facing the -z-axis direction). For example, one end of the protrusion may form substantially the same surface as the bottom surface of the base 440. However, this should not be considered as limiting.

According to an embodiment, at least one width of the printed circuit board 450 in a direction (for example, the -y-axis direction and/or - x-axis direction) in which the first portion 422 and the printed circuit board 450 overlap each other may be substantially the same as a width of the housing 420 in the direction in which the first portion 422 and the printed circuit board 450 overlap each other. For example, in the direction in which the first portion 422 and the printed circuit board 450 overlap each other, a width of the printed circuit board 450 of a portion where the first portion 422 and the printed circuit board 450 do not overlap each other may be substantially the same as the width of the housing 420. For example, in the direction in which the first portion 422 and the printed circuit board 450 overlap each other, the width of the printed circuit board 450 of the portion where the first portion 422 and the printed circuit board 450 do not overlap each other may be larger than or equal to the width of the housing 420. However, this should not be considered as limiting. For example, in the direction in which the first portion 422 and the printed circuit board 450 overlap each other, the width of the printed circuit board 450 of the portion where the first portion 422 and the printed circuit board 450 do not overlap each other may be smaller than or equal to the width of the housing 420.

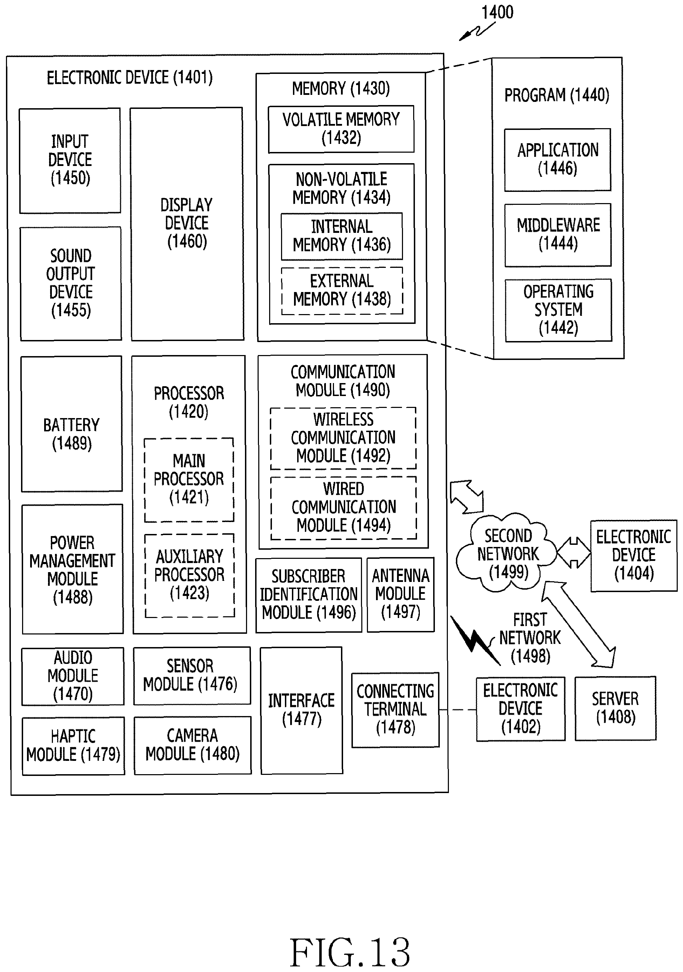

FIG. 13 is a block diagram of an electronic device 1401 in a network environment 1400 according to various embodiments.

Referring to FIG. 13, the electronic device 1401 in the network environment 1400 may communicate with an electronic device 1402 via a first network 1498 (e.g., a short-range wireless communication network), or may communicate with at least one of an electronic device 1404 or a server 1408 via a second network 1499 (e.g., a long-range wireless communication network). According to an embodiment, the electronic device 1401 may communicate with the electronic device 1404 via the server 1408. According to an embodiment, the electronic device 1401 may include a processor 1420, a memory 1430, an input module 1450, a sound output module 1455, a display module 1460, an audio module 1470, a sensor module 1476, an interface 1477, a connection terminal 1478, a haptic module 1479, a camera module 1480, a power management module 1488, a battery 1489, a communication module 1490, a subscriber identification module 1496, or an antenna module 1497. In a certain embodiment, at least one (e.g., the connection terminal 1478) of the components may be omitted from the electronic device 1401, or one or more other components may be added in the electronic device 1401. In a certain embodiment, some of the components (for example, the sensor module 1476, the camera module 1480, or the antenna module 1497) may be integrated into one component (for example, the display module 1460).

The processor 1420 may execute, for example, software (e.g., a program 1440) to control at least one other component (e.g., a hardware or software component) of the electronic device 1401 connected to the processor 1420, and may perform various data processing or computation. According to an embodiment, as at least a part of the data processing or computation, the processor 1420 may store a command or data received from another component (e.g., the sensor module 1476 or the communication module 1490) in a volatile memory 1432, may process a command or data stored in the volatile memory 1432, and may store resulting data in a non-volatile memory 1434. According to an embodiment, the processor 1420 may include a main processor 1421 (e.g., a central processing device or an application processor), or an auxiliary processor 1423 (e.g., a graphics processing device, a neural processing unit (NPU), an image signal processor, a sensor hub processor, or a communication processor) that is operable independently from, or in conjunction with, the main processor 1421. For example, when the electronic device 1401 includes the main processor 1421 and the auxiliary processor 1423, the auxiliary processor 1423 may be set to consume lower power than the main processor 1421, or to be specific to a designated function. The auxiliary processor 1423 may be implemented as separate from, or as part of the main processor 1421.

The auxiliary processor 1423 may control at least a part of functions or states related to at least one component (e.g., the display module 1460, the sensor module 1476, or the communication module 1490) among the components of the electronic device 1401, instead of the main processor 1421 while the main processor 1421 is in an inactive (e.g., sleep) state, or together with the main processor 1421 while the main processor 1421 is in an active state (e.g., executing an application). According to an embodiment, the auxiliary processor 1423 (e.g., an image signal processor or a communication processor) may be implemented as part of other components (e.g., the camera module 1480 or the communication module 1490) functionally related thereto. According to an embodiment, the auxiliary processor 1423 (e.g., a neural processing device) may include a hardware structure that is specific to processing of an artificial intelligence (AI) model. The AI model may be created through machine learning. Such learning may be performed in the electronic device 1401 itself, which performs the AI model, or may be performed through a separate server (for example, the server 1408). A learning algorithm may include, for example, supervised learning, unsupervised learning, semi-supervised learning, or reinforcement learning, but is not limited to the above-described examples. The AI model may include a plurality of AI neural network layers. The AI neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), a deep Q-network or one of combinations of two or more of the aforementioned neural networks, but is not limited to the above-described examples. The AI model may include a software structure additionally or alternatively, in addition to the hardware structure.

The memory 1430 may store various data used by at least one component (e.g., the processor 1420 or the sensor module 1476) of the electronic device 1401. The data may include, for example, software (e.g., the program 1440) and input data or output data regarding a command related thereto. The memory 1430 may include the volatile memory 1432 or the non-volatile memory 1434.

The program 1440 may be stored in the memory 1430 as software, and may include, for example, an operating system 1442, middleware 1444, or an application 1446.

The input module 1450 may receive a command or data to be used by a component (e.g., the processor 1420) of the electronic device 1401, from the outside (e.g., a user) of the electronic device 1401. The input module 1450 may include, for example, a microphone, a mouse, a keyboard, a key (for example, a button) or a digital pen (for example, a stylus pen).

The sound output module 1455 may output sound signals to the outside of the electronic device 1401. The sound output module 1455 may include, for example, a speaker or a receiver. The speaker may be used for general purposes, such as playing multimedia or replaying. The receiver may be used to receive an incoming call. According to an embodiment, the receiver may be implemented as separate from, or as part of the speaker.

The display module 1460 may visually provide information to the outside (e.g., a user) of the electronic device 1401. The display module 1460 may include, for example, a display, a hologram device, or a projector and a control circuitry to control a corresponding device. According to an embodiment, the display module 1460 may include a touch sensor set to detect a touch, or a pressure sensor set to measure the intensity of force generated by the touch.

The audio module 1470 may convert a sound into an electrical signal or, reversely, may convert an electrical signal into a sound. According to an embodiment, the audio module 1470 may obtain a sound via the input module 1450, or may output a sound via the sound output module 1455 or an external electronic device (e.g., the electronic device 1402) (e.g., a speaker or a headphone) directly or wirelessly connected with the electronic device 1401.

The sensor module 1476 may detect an operational state (e.g., power or temperature) of the electronic device 1401 or an environmental state (e.g., a state of a user) external to the electronic device, and may generate an electrical signal or data value corresponding to the detected state. According to an embodiment, the sensor module 1476 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1477 may support at least one specified protocol to be used for the electronic device 1401 to be connected with an external electronic device (e.g., the electronic device 1402) directly or wirelessly. According to an embodiment, the interface 1477 may include, for example, a high definition multimedia interface (HDMI), a universal serial bus (USB) interface, a secure digital (SD) card interface, or an audio interface.

The connection terminal 1478 may include a connector via which the electronic device 1401 may be physically connected with an external electronic device (e.g., the electronic device 1402). According to an embodiment, the connection terminal 1478 may include, for example, a HDMI connector, a USB connector, a SD card connector, or an audio connector (e.g., a headphone connector).

The haptic module 1479 may convert an electrical signal into a mechanical stimulus (e.g., a vibration or a movement) or electrical stimulus which may be perceived by a user via tactile sensation or kinesthetic sensation of the user. According to an embodiment, the haptic module 1479 may include, for example, a motor, a piezoelectric element, or an electric stimulator.

The camera module 1480 may shoot a still image or a moving image. According to an embodiment, the camera module 1480 may include one or more lenses, image sensors, image signal processors, or flashes.

The power management module 1488 may manage power supplied to the electronic device 1401. According to an embodiment, the power management module 1488 may be implemented as at least a part of, for example, a power management integrated circuit (PMIC).

The battery 1489 may supply power to at least one component of the electronic device 1401. According to an embodiment, the battery 1489 may include, for example, a primary cell which is not rechargeable, a secondary cell which is rechargeable, or a fuel cell.

The communication module 1490 may support establishment of a direct (e.g., wired) communication channel or a wireless communication channel between the electronic device 1401 and an external electronic device (e.g., the electronic device 1402, the electronic device 1404, or the server 1408), and performance of communication via the established communication channel. The communication module 1490 may include one or more communication processors that are operable independently from the processor 1420 (e.g., an application processor) and supports direct (e.g., wired) communication or wireless communication. According to an embodiment, the communication module 1490 may include a wireless communication module 1492 (e.g., a cellular communication module, a short-range wireless communication module, or a global navigation satellite system (GNSS) communication module) or a wired communication module 1494 (e.g., a local area network (LAN) communication module or a power line communication module). A corresponding communication module of these communication modules may communicate with the external electronic device 1404 via the first network 1498 (e.g., a short-range communication network, such as Bluetooth^{™}, wireless-fidelity (Wi-Fi) direct, or infrared data association (IrDA)) or the second network 1499 (e.g., a long-range communication network, such as a legacy cellular network, a 5G network, a next-generation communication network, the Internet, or a computer network (e.g., LAN or wide area network (WAN)). These various types of communication modules may be integrated into a single component (e.g., a single chip), or may be implemented as a plurality of components (e.g., a plurality of chips) separate from one another. The wireless communication module 1492 may identify or authenticate the electronic device 1401 in a communication network, such as the first network 1498 or the second network 1499, using subscriber information (e.g., international mobile subscriber identity (IMSI)) stored in the subscriber identification module 1496.

The wireless communication module 1492 may support a 5G network beyond a 4G network, and a next-generation communication technology, for example, a new radio (NR) access technology. The NR access technology may support high-speed transmission of high-capacity data (enhanced mobile broadband (eMBB)), terminal power minimization and access by multiple terminals (massive machine type communications (mMTC)), or high-reliability and low-latency (ultra-reliable and low latency communications (URLLC)). For example, the wireless communication module 1492 may support a high frequency band (for example, mmWave band) to achieve a high data transmission rate. The wireless communication module 1492 may support various technologies for guaranteeing performance in a high frequency band, for example, beamforming, massive multiple-input and multiple-output (MIMO), full dimensional MIMO (FD-MIMO), array antenna, analog beamforming, or large scale antenna. The wireless communication module 1492 may support various requirements prescribed for the electronic device 1401, an external electronic device (for example, the electronic device 1404), or a network system (for example, the second network 1499). According to an embodiment, the wireless communication module 1492 may support a peak data rate (for example, 20 Gbps or more) for implementing eMBB, a loss coverage (for example, 164 dB or less) for implementing mMTC, or U-plane latency (for example, downlink (DL) and uplink (UL) of 0.5 ms or less, or round trip of 1 ms or less) for implementing URLLC.

The antenna module 1497 may transmit or receive a signal or power to or from the outside (e.g., an external electronic device). According to an embodiment, the antenna module 1497 may include an antenna including a radiator which is formed of a conductor or a conductive pattern formed on a substrate (for example, a PCB). According to an embodiment, the antenna module 1497 may include a plurality of antennas (for example, an array antenna). In this case, at least one antenna appropriate for a communication scheme used in a communication network, such as the first network 1498 or the second network 1499, may be selected from the plurality of antennas by the communication module 1490. A signal or power may be transmitted or received between the communication module 1490 and an external electronic device via the selected at least one antenna. According to a certain embodiment, in addition to the radiator, other components (for example, a radio frequency integrated circuit (RFIC)) may be additionally formed as part of the antenna module 1497.

According to various embodiments, the antenna module 1497 may form an mmWave antenna module. According to an embodiment, the mmWave antenna module may include a printed circuit board, an RFIC which is disposed on a first surface (for example, a lower surface) of the printed circuit board or adjacent thereto, and supports a designated high frequency band (for example, mmWave band), and a plurality of antennas (for example, an array antenna) which are disposed on a second surface (for example, an upper surface or a side surface) of the printed circuit board or adjacent thereto, and transmit or receive a signal of the designated high frequency band.

At least some of the above-described components may be connected to one another and may exchange signals (e.g., commands or data) with one another through an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1401 and the external electronic device 1404 via the server 1408 connected to the second network 1499. The external electronic device 1402 or 1404 may be a device of a same type as, or a different type, from the electronic device 1401. According to an embodiment, all or some of operations executed at the electronic device 1401 may be executed in one or more external electronic devices of the external electronic devices 1402, 1404, or 1408. For example, if the electronic device 1401 should perform a function or a service automatically, or in response to a request from a user or another device, the electronic device 1401, instead of or in addition to executing the function or the service by itself, may request one or more external electronic devices to perform at least a part of the function or the service. The one or more external electronic devices receiving the request may perform at least a part of the function or the service requested, or an additional function or an additional service related to the request, and may carry an outcome of the performing to the electronic device 1401. The electronic device 1401 may provide the outcome, with or without further processing of the outcome, as at least a part of a reply to the request. To achieve this, cloud computing, distributed computing, mobile edge computing (MEC), or client-server computing technology may be used, for example. The electronic device 1401 may provide an ultra-low latency service by using distributed computing or mobile edge computing, for example. In an embodiment, the external electronic device 1404 may include an Internet of things (IoT) device. The server 1408 may be an intelligent server that uses machine learning and/or a neural network. According to an embodiment, the external electronic device 1404 or the server 1408 may be included in the second network 1499. The electronic device 1401 may be applied to an intelligent service (for example, smart home, smart city, smart car, or health care) based on a 5G communication technology and an IoT-related technology.

The electronic device according to various embodiments of the disclosure may be various types of devices. The electronic device may include, for example, a portable communication device (for example, a smart phone), a computer device, a portable multimedia device, a portable medical device, a camera, a wearable device, or a home appliance. According to an embodiment of the disclosure, the electronic device is not limited to the above-described devices.

It should be appreciated that various embodiments of the disclosure and the terms used therein are not intended to limit the technological features set forth herein to particular embodiments, and include various changes, equivalents, or alternatives for a corresponding embodiment. With regard to the description of the drawings, similar reference numerals may be used to refer to similar or related elements. It is to be understood that a singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include one or all possible combinations of the items enumerated together in a corresponding one of the phrases. As used herein, such terms as "1st" and "2nd," or "first" and "second" may be used to simply distinguish a corresponding component from another, and does not limit the components in other aspect (for example, importance or order). It is to be understood that if an element (for example, a first element) is referred to, with or without the term "operatively" or "communicatively", as "coupled with," "coupled to", "connected with", or "connected to" another element (for example, a second element), it means that the element may be coupled with another element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments of the disclosure may be implemented as software (for example, the program 1440) including one or more instructions that are stored in a storage medium (for example, internal memory 1436 or external memory 1438) that is readable by a machine (for example, the electronic device 1401). For example, a processor (for example, the processor 1420) of the machine (for example, the electronic device 1401) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. The term "non-transitory" simply means that the storage medium is a tangible device, and does not include a signal (for example, an electromagnetic wave), but this term does not differentiate between a case where data is semi-permanently stored in the storage medium and a case where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (for example, compact disc read only memory (CD-ROM)), or may be distributed (for example, downloaded or uploaded) online via an application store (for example, Play Store^{TM}), or between two user devices (for example, smart phones) directly. If distributed online, at least a part of the computer program product may be temporarily generated or at least temporarily stored in the machine-readable storage medium, such as memory of the manufacturer's server, a server of the application store, or a relay server.

According to various embodiments, each component (for example, a module or a program) of the above-described components may include a single entity or multiple entities, and some of the multiple entities may be separately disposed in other components. According to various embodiments, one or more of the above-described components or operations may be omitted, or one or more other components or operations may be added. Alternatively or additionally, a plurality of components (for example, modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

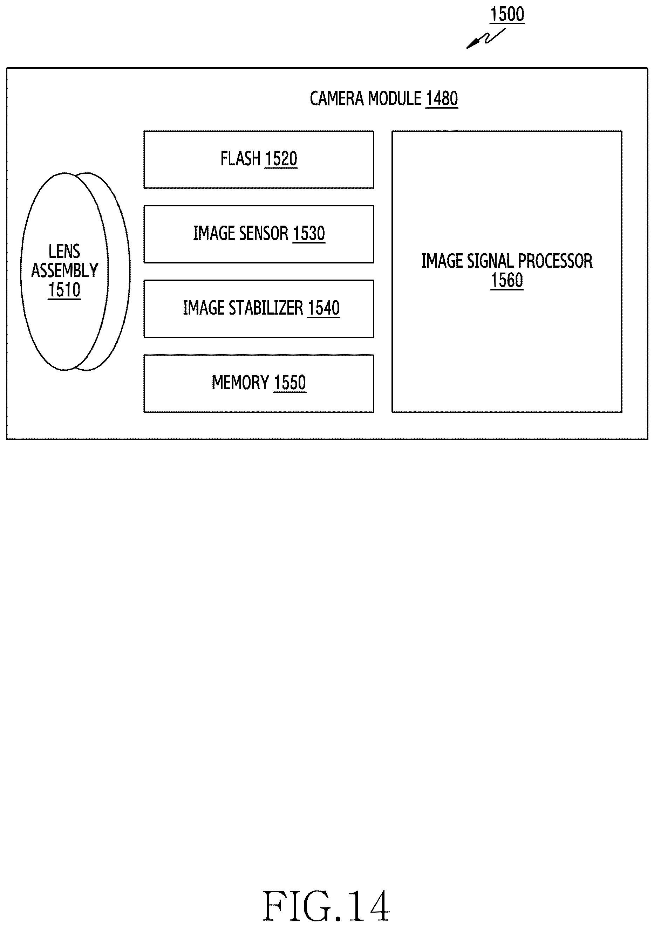

FIG. 14 is a block diagram 1500 illustrating a camera module 1480 according to various embodiments.

Referring to FIG. 14, the camera module 1480 may include a lens assembly 1510, a flash 1520, an image sensor 1530, an image stabilizer 1540, a memory 1550 (for example, a buffer memory) or an image signal processor 1560. The lens assembly 1510 may collect light emitted from a subject which is a target for photographing. The lens assembly 151 may include one or more lenses. According to an embodiment, the camera module 1480 may include a plurality of lens assemblies 1510. In this case, the camera module 1480 may configure, for example, a dual camera, a 360-degree camera, or a spherical camera. Some of the plurality of lens assemblies 1510 may have the same lens attribute (for example, an angle of view, a focal distance, auto-focusing, an f number, or optical zoom), or at least one lens assembly may have one or more lens attributes different from lens attributes of the other lens assemblies. The lens assembly 1510 may include, for example, a wide-angle lens and a telephoto lens.

The flash 1520 may emit light to be used to strengthen light discharged or reflected from a subject. According to an embodiment, the flash 1520 may include one or more light emitting diodes (LEDs) (for example, red-green-blue (RGB) LED, white LED, infrared LED, or ultraviolet LED) or a xenon lamp. The image sensor 1530 may acquire an image corresponding to a subject by converting light discharged or reflected from the subject and transmitted through the lens assembly 1510 into an electrical signal. According to an embodiment, the image sensor 1530 may include one image sensor selected from image sensors having different attributes, such as an RGB sensor, a black and white (BW) sensor, an IR sensor, or a UV sensor, a plurality of image sensors having the same attribute, or a plurality of image sensors having different attributes. Each of the image sensors included in the image sensor 1520 may be implemented by using a charged coupled device (CCD) sensor or a complementary metal oxide semiconductor (CMOS) sensor, for example.

The image stabilizer 1540 may move at least one lens included in the lens assembly 1510 or the image sensor 1530 in a specific direction or may control operation characteristics of the image sensor 1530 (for example, adjust a read-out timing), in response to a movement of the camera module 1480 or an electronic device including the same (for example, the electronic device 1401 of FIG. 13). This may compensate for at least a part of negative effects caused by movements on a shot image. According to an embodiment, the image stabilizer 1540 may detect such movement of the camera module 1480 or the electronic device 1401 by using a gyro sensor (not shown) or an acceleration sensor (not shown) disposed inside or outside the camera module 1480. According to an embodiment, the image stabilizer 1540 may be implemented by an optical image stabilizer, for example. The memory 1550 may at least temporarily store at least a part of the image obtained through the image sensor 1530 for next image processing operations. For example, when image acquisition is delayed due to a shutter or a plurality of images are obtained at high speed, the obtained original image (for example, a Bayer-patterned image or a high-resolution image) may be stored in the memory 1550, and a copy image corresponding thereto (for example, a low-resolution image) may be previewed through the display module 1460. When a designated condition is satisfied thereafter (for example, a user input or a system command), at least a part of the original image stored in the memory 1550 may be obtained and processed by the image signal processor 1560. According to an embodiment, the memory 1550 may be configured as at least a part of the memory 1430 or a separate memory operated independently therefrom.

The image signal processor 1560 may perform one or more image processing operations with respect to an image obtained through the image sensor 130 or an image stored in the memory 1550. The one or more image processing operations may include, for example, depth map generation, 3D modeling, panorama generation, feature point extraction, image synthesis, or image compensation (for example, noise reduction, resolution adjustment, brightness adjustment, blurring, sharpening or softening). Additionally or alternatively, the image signal processor 1560 may control (for example, control of an exposure time, control of a read-out timing) at least one (for example, the image sensor 1530) of the components included in the camera module 1480. The image processed by the image signal processor 1560 may be stored again in the memory 1550 or may be provided to an external component of the camera module 1480 (for example, the memory 1430, the display module 1460, the electronic device 1402, the electronic device 1404, or the server 1408 of FIG. 13) for additional processing. According to an embodiment, the image signal processor 1560 may be configured as at least a part of the processor 1402 of FIG. 13 or a separate processor operated independently from the processor 1420. When the image signal processor 1560 is configured as a separate processor from the processor 1420, at least one image processed by the image signal processor 1560 may be displayed by the processor 1420 as it is, or may be displayed through the display module 1460 after undergoing additional image processing.

According to an embodiment, the electronic device 1401 may include a plurality of camera modules 1480 having different attributes or functions. In this case, at least one of the plurality of camera modules 1480 may be a wide angle camera, and at least one other camera module may be a telephoto camera. Similarity, at least one of the plurality of camera modules 1480 may be a front-facing camera, and at least one other camera module may be a rear-facing camera.

As described above, a camera module (for example, the first camera module 100 of FIG. 1) according to an embodiment may include: a housing (for example, the housing 120 of FIG. 1); a lens assembly (for example, the lens assembly 110 of FIG. 1) disposed to be movable with respect to the housing and including at least one lens; a first drive unit (for example, the first drive unit 170 of FIG. 2) disposed in the housing to move the lens assembly in a first direction (for example, the z-axis or -z-axis direction of FIG. 1) with respect to the housing; an image sensor (for example, the image sensor 160 of FIG. 2) configured to convert light received through the at least one lens into an electrical signal; and a printed circuit board (for example, the printed circuit board 150 of FIG. 2) in which the image sensor is disposed. The first drive unit may include a first carrier (for example, the first carrier 171 of FIG. 2) configured to carry the lens assembly in the first direction, and at least one first sphere (for example, the at least one first sphere 174 of FIG. 2) disposed between the first carrier and the housing to allow the first carrier to move in the first direction relative to the housing. The first carrier may include at least one first guide portion (for example, the first guide portion 175 of FIG. 6) configured to guide the at least one first sphere to move in the first direction. The housing may include a first portion (for example, the first portion 122 of FIG. 2) disposed to at least partially overlap the printed circuit board in a direction substantially perpendicular to the first direction to form a recess (for example, the recess 123 of FIG. 2) in the housing to accommodate at least a portion of the at least one first guide portion of the first carrier. At least one width of the printed circuit board in a direction in which the first portion and the printed circuit board overlap each other may be substantially the same as a width of the housing in the direction in which the first portion and the printed circuit board overlap each other.

According to an embodiment, the camera module may further include a base on which the housing is seated. The printed circuit board may be disposed between the housing and the base. The first portion may be disposed to at least partially overlap the printed circuit board and the base in the direction substantially perpendicular to the first direction.

According to an embodiment, the first portion may include a protrusion protruding from a bottom surface of the housing facing the printed circuit board. The printed circuit board may include a first opening (for example, the first opening 151 of FIG. 3) to accommodate the protrusion.

According to an embodiment, the camera module may further include a base on which the housing is seated. The printed circuit board may be disposed between the housing and the base. At least a portion of the first portion may form substantially the same surface as a bottom surface of the printed circuit board facing the base, and may face the base.

According to an embodiment, the camera module may further include a base on which the housing is seated. The printed circuit board may be disposed between the housing and the base. The base may include a second opening (for example, the second opening 141 of FIG. 3) to accommodate the protrusion penetrating through the first opening.

According to an embodiment, at least a part of the first portion may form substantially the same surface as a bottom surface of the base.

According to an embodiment, the first drive unit may include: a first magnet (for example, the first magnet 172 of FIG. 2) disposed on a first side (for example, the first side 171a of FIG. 2) of the first carrier; and a first coil (for example, the first coil 173 of FIG. 2) disposed to face the first magnet.

According to an embodiment, the first drive unit may include at least one second sphere (for example, the at least one second sphere 176 of FIG. 6) disposed between the housing and the first carrier to allow the first carrier to move. The first carrier may include at least one second guide portion (for example, the at least one second guide portion 177 of FIG. 6) configured to guide the at least one second sphere to move in the first direction. The first magnet may be disposed between the at least one first guide portion and the at least one second guide portion.

According to an embodiment, the first guide portion may have a first length in the first direction, and the second guide portion may have a second length which is smaller than the first length in the first direction.

According to an embodiment, the camera module may further include a base on which the housing is seated. The printed circuit board may be disposed between the housing and the base. The first portion may be disposed to at least partially overlap the printed circuit board in the direction substantially perpendicular to the first direction to form the recess in the housing to accommodate at least a portion of the at least one first guide portion at a position closer to the base than the at least one second guide portion.

According to an embodiment, the first portion may include at least one recess to accommodate at least a portion of an edge (for example, the edge 451 of FIG. 11) of the printed circuit board and to restrict a movement of the housing in the first direction.

According to an embodiment, the camera module may include a second drive unit (for example, the second drive unit 180 of FIG. 2) configured to move the lens assembly in at least one direction of a second direction or a third direction which is different from the second direction with respect to the housing.

According to an embodiment, the second drive unit may include a second carrier (for example, the second carrier 181 of FIG. 2) configured to carry the lens assembly in the second direction and a third carrier configured to carry the lens assembly in the third direction.

According to an embodiment, the second drive unit may include at least one third sphere disposed between the second carrier and the third carrier to allow the second carrier to move over the third carrier. At least one of the second carrier or the third carrier may include at least one third guide portion configured to guide the third sphere to move over the third carrier in the second direction.

According to an embodiment, the second drive unit may further include at least one fourth sphere disposed between the first carrier and the third carrier. At least one of the first carrier or the third carrier may include at least one fourth guide portion configured to guide the fourth sphere to move over the first carrier in the third direction.

As described above, an electronic device (for example, the electronic device 1401 of FIG. 13) according to an embodiment may include a camera module (for example, the camera module 100 of FIG. 1) and at least one processor (for example, the processor 1420 of FIG. 13) configured to control operations of the camera module. The camera module may include: a housing; a lens assembly disposed to be movable with respect to the housing and including at least one lens; a first drive unit disposed inside the housing to move the lens assembly in a first direction with respect to the housing; an image sensor configured to convert light received through the at least one lens into an electrical signal; and a printed circuit board in which the image sensor is disposed. The first drive unit may include a first carrier configured to carry the lens assembly in the first direction, and at least one first sphere disposed between the first carrier and the housing to allow the first carrier to move in the first direction relative to the housing. The first carrier may include at least one first guide portion configured to guide the at least one first sphere to move in the first direction. The housing may include a first portion disposed to at least partially overlap the printed circuit board in a direction substantially perpendicular to the first direction to form a recess in the housing to accommodate at least a portion of the at least one first guide portion of the first carrier. At least one width of the printed circuit board in a direction in which the first portion and the printed circuit board overlap each other may be substantially the same as a width of the housing in the direction in which the first portion and the printed circuit board overlap each other.

According to an embodiment, the electronic device may further include a base on which the housing is seated. The printed circuit board may be disposed between the housing and the base. The first portion may be disposed to at least partially overlap the printed circuit board and the base in the direction substantially perpendicular to the first direction.

According to an embodiment, the first portion may include a protrusion protruding from a bottom surface of the housing facing the printed circuit board. The printed circuit board may include a first opening to accommodate the protrusion.

According to an embodiment, the electronic device may further include a base on which the housing is seated. The printed circuit board may be disposed between the housing and the base. At least a portion of the first portion may form substantially the same surface as a bottom surface of the printed circuit board facing the base, and at least a portion of the first portion may face the base.

According to an embodiment, the electronic device may further include a base on which the housing is seated. The printed circuit board may be disposed between the housing and the base. The base may include a second opening to accommodate the protrusion penetrating through the first opening. At least a portion of the first portion may form substantially the same surface as a bottom surface of the base.

The technical object to be achieved by the disclosure is not limited to those mentioned above, and other technical objects that are not mentioned above may be clearly understood to those skilled in the art of the disclosure.

The effect achieved by the disclosure is not limited to those mentioned above, and other effects that are not mentioned above may be clearly understood to those skilled in the art of the disclosure.

## Claims

1. A camera module comprising:
a housing;
a lens assembly disposed to be movable with respect to the housing and including at least one lens;
a first drive unit disposed in the housing to move the lens assembly in a first direction with respect to the housing;
an image sensor configured to convert light received through the at least one lens into an electrical signal; and
a printed circuit board in which the image sensor is disposed,
wherein the first drive unit includes a first carrier configured to carry the lens assembly in the first direction, and at least one first sphere disposed between the first carrier and the housing to allow the first carrier to move in the first direction relative to the housing,
wherein the first carrier includes at least one first guide portion configured to guide the at least one first sphere to move in the first direction,
wherein the housing includes a first portion disposed to at least partially overlap the printed circuit board in a direction substantially perpendicular to the first direction to form a recess in the housing to accommodate at least a portion of the at least one first guide portion of the first carrier,
wherein at least one width of the printed circuit board in a direction in which the first portion and the printed circuit board overlap each other is substantially the same as a width of the housing in the direction in which the first portion and the printed circuit board overlap each other.

2. The camera module of claim 1, further comprising a base on which the housing is seated,
wherein the printed circuit board is disposed between the housing and the base, and
wherein the first portion is disposed to at least partially overlap the printed circuit board and the base in the direction substantially perpendicular to the first direction.

3. The camera module of claim 1, wherein the first portion includes a protrusion protruding from a bottom surface of the housing facing the printed circuit board, and
wherein the printed circuit board includes a first opening to accommodate the protrusion.

4. The camera module of claim 3, further comprising a base on which the housing is seated,
wherein the printed circuit board is disposed between the housing and the base,
wherein at least a portion of the first portion forms substantially the same surface as a bottom surface of the printed circuit board facing the base, and faces the base.

5. The camera module of claim 3, further comprising a base on which the housing is seated,
wherein the printed circuit board is disposed between the housing and the base,
wherein the base includes a second opening to accommodate the protrusion penetrating through the first opening.

6. The camera module of claim 5, wherein at least a portion of the first portion forms substantially the same surface as a bottom surface of the base.

7. The camera module of claim 1, wherein the first drive unit comprises:
a first magnet disposed on a first side of the first carrier; and
a first coil disposed to face the first magnet.

8. The camera module of claim 7, wherein the first drive unit includes at least one second sphere disposed between the housing and the first carrier to allow the first carrier to move,
wherein the first carrier includes at least one second guide portion configured to guide the at least one second sphere to move in the first direction, and
wherein the first magnet is disposed between the at least one first guide portion and the at least one second guide portion.

9. The camera module of claim 8, wherein the first guide portion has a first length in the first direction, and
wherein the second guide portion has a second length which is smaller than the first length in the first direction.

10. The camera module of claim 8, further comprising a base on which the housing is seated,
wherein the printed circuit board is disposed between the housing and the base,
wherein the first portion is disposed to at least partially overlap the printed circuit board in the direction substantially perpendicular to the first direction to form the recess in the housing to accommodate at least a portion of the at least one first guide portion at a position closer to the base than the at least one second guide portion.

11. The camera module of claim 1, wherein the first portion includes at least one recess to accommodate at least a portion of an edge of the printed circuit board and to restrict a movement of the housing in the first direction.

12. The camera module of claim 1, comprising a second drive unit configured to move the lens assembly in at least one direction of a second direction or a third direction which is different from the second direction with respect to the housing.

13. The camera module of claim 12, wherein the second drive unit includes a second carrier configured to carry the lens assembly in the second direction and a third carrier configured to carry the lens assembly in the third direction.

14. The camera module of claim 13, wherein the second drive unit includes at least one third sphere disposed between the second carrier and the third carrier to allow the second carrier to move over the third carrier, and
wherein at least one of the second carrier or the third carrier includes at least one third guide portion configured to guide the third sphere to move over the third carrier in the second direction.

15. The camera module of claim 14, wherein the second drive unit further includes at least one fourth sphere disposed between the first carrier and the third carrier, and
wherein at least one of the first carrier or the third carrier includes at least one fourth guide portion configured to guide the fourth sphere to move over the first carrier in the third direction.
